# EUROPEAN PATENT APPLICATION

(11) **EP 4 786 750 A1**
(43) Date of publication of application: **05.08.2026**
(21) Application number: 26152443.3
(22) Date of filing: 16.01.2026
(51) Int. Cl.: F01D 21/00, G01B 11/02, G01B 11/24

(54) **REFERENCE MARKERS FOR ENGINE COMPONENTS AND METHODS OF MEASURING THE SAME**

(30) Priority: 04.02.2025 US 202519045383
(71) Applicant: General Electric Company, Cincinnati, Ohio 45215 (US)
(72) Inventor: KASBERG, Timothy, Evendale, 45215 (US); SCHELFAUT, Timothy Leo, Evendale, 45215 (US); GOEPPER, Donald Ira, Evendale, 45215 (US); SAK, Wojciech, Evendale, 45215 (US)
(74) Representative: Openshaw & Co.

(57) **Abstract**

Systems, apparatus, articles of manufacture, and methods are disclosed for reference markers for engine components. An example turbine engine (100) includes a substrate (118, 142) and a blade (164, 168, 172, 176, 706, 708) coupled to the substrate (118, 142), the blade (164, 168, 172, 176, 706, 708) including a first side having an external surface (214) and a reference marker (216, 218, 302, 402, 502, 602, 604, 606, 722, 724) provided on the external surface (214), the reference marker (216, 218, 302, 402, 502, 602, 604, 606, 722, 724) including spatial marking features having predetermined dimensions, the spatial marking features including (a) a first spatial marking feature at a first location on the external surface (214) and (b) a second spatial marking feature at a second location on the external surface (214) that is different than the first location, wherein a combination of the first spatial marking feature and the second spatial marking feature provide a first measure of the blade (164, 168, 172, 176, 706, 708) based on the predetermined dimensions.

## Description

### FIELD OF THE DISCLOSURE

This disclosure relates generally to gas turbine engines and, more particularly, to reference markers for engine components and methods of measuring the same.

### BACKGROUND

A gas turbine engine generally includes, in serial flow order, an inlet section, a compressor section, a combustion section, a turbine section, and an exhaust section. In operation, air enters the inlet section and flows to the compressor section where one or more axial compressors progressively compress the air until it reaches the combustion section, creating combustion gases. The combustion gases flow from the combustion section through a hot gas path defined within the turbine section and then exit the turbine section via the exhaust section. During operation of the gas turbine engine, various systems generate a relatively large amount of heat and stress. These stresses can cause one or more components of the engine to distort.

### BRIEF DESCRIPTION OF THE DRAWINGS

FIG. 1 is an environment including a cross-sectional view of an example gas turbine engine in which examples disclosed herein may be implemented.
FIG. 2 is an airfoil for a gas turbine engine having example reference markers structured in accordance with teachings of this disclosure.
FIG. 3 is an airfoil for a gas turbine engine having another example reference marker structured in accordance with teachings of this disclosure.
FIG. 4 is an airfoil for a gas turbine engine having another example reference marker structured in accordance with teachings of this disclosure.
FIG. 5 is an airfoil for a gas turbine engine having another example reference marker structured in accordance with teachings of this disclosure.
FIG. 6 is an airfoil for a gas turbine engine having another example reference marker structured in accordance with teachings of this disclosure.
FIG. 7 is a section of a gas turbine engine including components having example reference markers structured in accordance with teachings of this disclosure.
FIG. 8 is a flowchart representative of an example method for detecting distortion in a component of a gas turbine engine in accordance with teachings disclosed herein.
FIG. 9 is a block diagram of example inspection circuitry configured to analyze example reference markers disclosed herein.
FIG. 10 is a flowchart representative of an example method for detecting distortion of a component of a gas turbine engine in accordance with teachings disclosed herein.
FIG. 11 is a block diagram of an example processing platform including programmable circuitry structured to execute, instantiate, and/or perform the example machine readable instructions and/or perform the example operations of FIG. 10 to implement the inspection circuitry 186 of FIG. 9.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

During operation of a gas turbine engine, various engine components are subjected to operational loads (e.g., thermal loads, pressure loads, mechanical loads, etc.) and/or environmental conditions that can cause distortions of the components. As used herein, the term "distortion" refers to an alteration of a component. The term "distortion" generally encompasses non-material alterations (e.g., tip loss, displacement, wear, deterioration, etc.) as well as more serious alterations, such as (but not limited to) creep, curving, bending, deformation, shrinkage, etc. Such alterations can be indicative of damage that has occurred or may occur therein. Though some distortion is typically acceptable for an engine component, distortion beyond a particular threshold may trigger component repair or replacement. As such, aircraft engine components are frequently inspected to identify parts that have exceeded their service life.

As a non-limiting example, tip clearance between a rotor blade and a surrounding structure (e.g., a casing, a shroud, etc.) can vary during engine operation, allowing a tip of the blade to rub against the surrounding structure. Such tip rubbing between a blade and a surrounding casing can cause tip loss (e.g., abrasion of the tip of the blade), shorten a life of the blade, lead to a blade-out even in which the blade is released from its rotor during operation, and/or cause vibrations of the gas turbine engine that reduce overall engine performance. An amount of tip loss experienced by the rotor blade can be indicative of an amount of tip rubbing that occurred during operation of the gas turbine engine. As such, blade tips are often inspected to detect and measure tip loss of the rotor blade resulting from such tip rubbing.

Conventional methods for blade tip inspection include fabricating (e.g., machining) notches or cuts into blade tips of a subset of airfoils (e.g., two airfoils, three airfoils, etc.) that are spaced circumferentially around a rotor. Subsequently, a manual borescope inspection process is needed to locate and capture images of the notched blade tips to estimate tip loss. For example, two or more notches of different heights or depths (e.g., 0.005 inches, 0.010 inches, 0.015 inches, 0.020 inches, etc.) are typically manufactured into a blade tip and compared to one another over time to estimate tip loss. However, manual fabrication of the blades tip notches drives variation in notch depth accuracy, which can reduce an accuracy of a tip loss estimation. This variation can also create uncertainty in estimations of total tip loss (e.g., over multiple inspections) and total tip clearance. Additionally, such manual measurement and comparison of the blade tip notches can further reduce the accuracy of the tip loss estimation. Because tip loss and other distortions of a component can affect performance of a gas turbine engine, accurate measurement is beneficial.

Traditional inspection methods of other components often require trained technicians to remove a component from a gas turbine engine for inspection. Such methods are time-consuming and expensive, as they require engine downtime and reduce time on-wing. Accordingly, an improved system and method for inspecting gas turbine engine components would be advantageous.

Aspects of this disclosure relate generally to systems, methods, articles of manufacture, and apparatus for in situ inspection of a component of a gas turbine engine. Example measurement systems disclosed herein include an example reference mark or marker structured to facilitate distortion detection of a component. Example reference markers disclosed herein are optically identifiable markers manufactured on an exposed surface of a component. As used herein, the term "exposed surface" refers to a surface of a component that is visible. For example, the exposed surface is a surface that is visible to an image capture device (e.g., an image sensor, a camera, an image device, etc.) while the component remains installed in the gas turbine engine. By positioning a reference marker on an exposed surface of a component, image data of the reference marker on the component can be captured without removal of the component from the gas turbine engine.

In particular, a reference marker disclosed herein is disposed on the exterior surface of the component to facilitate a measure of the component indicative of a distortion such as, but not limited to, tip loss, creep, shrinkage, displacement, strain, stress, etc. As used herein, a reference marker (e.g., a fiducial marker, a datum reference, etc.) refers to a pattern or design fabricated on a surface of a component (e.g., a part, an object, etc.) against which a measurement can be determined. The reference markers can include optically identifiable features (e.g., visible, optic, etc.) against which a component can be orientated. In other words, reference markers disclosed herein are optically perceptible by an inspection tool without disassembly of a gas turbine engine and/or while the gas turbine engine remains installed on an aircraft. Based on one or more images of the reference marker on the component, the features of the reference marker can be used to measure an aspect of the component and/or an adjacent component indicative of a distortion.

Example reference markers disclosed herein include spatial marking features that provide a frame of reference against which the component can be analyzed for inspection. In particular, the spatial marking features are optically identifiable features that serve as reference points in defining a geometry of the component. For example, the reference markers disclosed herein include spatial marking features such as (but not limited to) one or more lines, dots, edges, points, corners, etc. that define reference or coordinate system (e.g., a spatial index) against which the geometry of the component can be determined. In some examples, the spatial marking features have known dimensions to enable measurement of the component based on the reference markers. For example, the reference markers can be used as a scale to determine a dimension of the component. In some examples, the reference markers includes or implements a measurement unit to determine a dimension of the component.

Certain reference marker disclosed herein include identifying features. For example, the reference marker can be encoded with an identifier (e.g., an ID) using the identifying features to enable identification of a components having such reference markers. In some such examples, an electronic device (e.g., a computing device, etc.) can be trained to decode the reference markers to identify a particular component based on an ID encoded in the reference marker and a look-up table or other data structure having the ID associated with the particular component.

Certain reference markers disclosed herein include features that are detectable by an electronic device. The detectable features are optically identifiable feature displayed on the exterior surface of the component and that can be depicted in an image of the reference marker on the component. For example, the detectable features can include, but are not limited to, points, edges, objects, corners, lines, circles, etc. of the reference marker.

In some examples, the detectable features can be used in conjunction with a detection algorithm executed by the electronic device to enable automated detection of the reference marker on the component. In some examples, the detectable features can be used in conjunction with artificial intelligence (AI) model and/or algorithm to enable the electronic device to determine a position and/or orientation of the reference marker. In other words, an electronic device can be configured to execute an algorithm(s) and/or model(s) to identify, detect, localize, orient, and/or decode certain reference markers disclosed herein based on their features.

As used herein, the terms "located", "positioned", "disposed", "arranged", and "displayed" are used interchangeably in reference to any pattern, reference, and/or marker that is in any way on an airfoil to refer to a location of an exterior surface of a component at which the pattern, reference, and/or marker is manufactured or fabricated.

As used herein, a "blade" (e.g., a "vane") refers to a component of a gas turbine engine having an airfoil structured to operate on a working fluid during operation of the gas turbine engine. For example, the blade can direct the working fluid (e.g., air) during operation of the gas turbine engine. A blade can refer to a rotatable blade and/or a stationary blade. A blade can include a rotor blade, a stator vane, an outlet guide vane, a nozzle guide vane, etc. Typically, a blade is one of an array of blades coupled to the gas turbine engine via an annular substrate (e.g., an annular wall, etc.), such as (but not limited to) a disk, a shroud, a casing, and/or a combination thereof. In some examples, a blade implements means for directing a fluid.

In the following detailed description, reference is made to the accompanying drawings that form a part hereof, and in which is shown by way of illustration specific examples that may be practiced. These examples are described in sufficient detail to enable one skilled in the art to practice the subject matter, and it is to be understood that other examples may be utilized. The following detailed description is, therefore, provided to describe example implementations and not to be taken limiting on the scope of the subject matter described in this disclosure. Certain features from different aspects of the following description may be combined to form yet new aspects of the subject matter discussed below.

For purposes of illustration, the present disclosure will be described with respect to a components of a gas turbine engine for an aircraft. More specifically, the aspects of this disclosure are directed towards one or more reference markers provided on a component of blade assembly of a gas turbine engine. It will be understood, however, that aspects of the disclosure described herein are not so limited and may have generally applicability for components in an engine, as well as in non-aircraft applications, such as other mobile applications and non-mobile industrial, commercial, and residential applications.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values.

In some examples used herein, the term "substantially" is used to describe a relationship between two parts that is within three degrees of the stated relationship (e.g., a substantially same relationship is within three degrees of being the same, a substantially flush relationship is within three degrees of being flush, etc.). In some examples used herein, the term "substantially" is used to describe a value that is within 10% of the stated value.

As used herein "substantially real time" refers to occurrence in a near instantaneous manner recognizing there may be real world delays for computing time, transmission, etc.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

The terms "upstream" and "downstream" refer to the relative direction with respect to fluid flow in a fluid pathway. For example, "upstream" refers to the direction from which the fluid flows, and "downstream" refers to the direction to which the fluid flows. For example, with regard to a gas turbine engine, an engine inlet is said to be upstream of an engine outlet, and the engine outlet is said to be downstream of the engine inlet.

Various terms are used herein to describe the orientation of features. In general, the attached figures can be annotated with reference to an axial direction A, a radial direction R, and/or a circumferential direction C of the vehicle associated with the features, forces, and moments. The axial direction refers to a direction parallel to the axis of rotation z about which the rotating components of a turbine engine rotate. The radial direction refers to a direction that is perpendicular to the axis of rotation and points towards (radially inward) or away from (radially outward) the axis of rotation. The circumferential direction at a given point is a direction that is normal to a local radial direction and normal to the axial direction.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, objects and/or things, the phrase "at least one of A or B" is intended to refer to implementations including any of (1) at least one A, (2) at least one B, or (3) at least one A and at least one B.

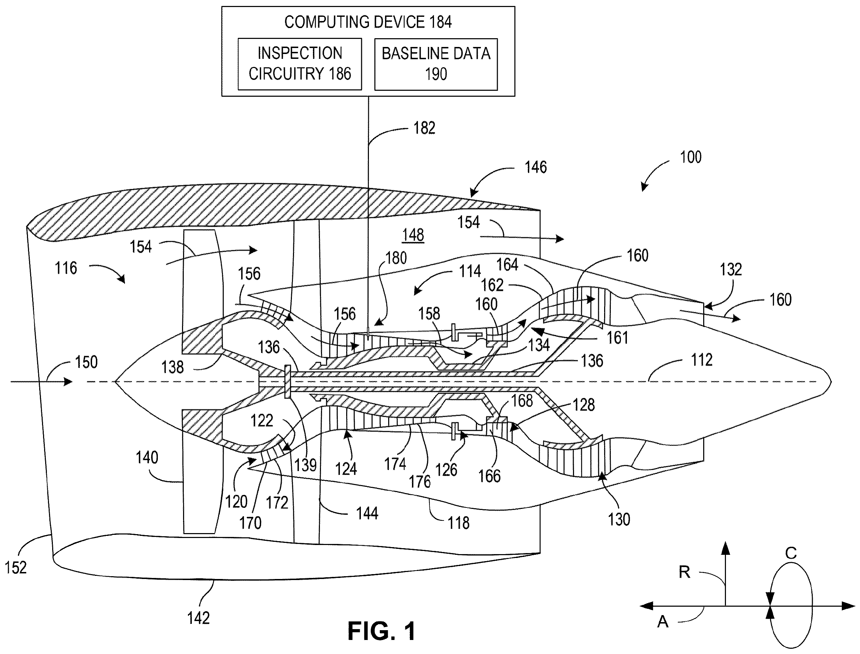

Referring now to the drawings, wherein identical numerals indicate the same elements throughout the figures, FIG. 1 illustrates an example environment including a schematic cross-sectional view of an example high-bypass turbofan-type gas turbine engine ("turbofan engine 100"). While the illustrated example is a high-bypass turbofan engine, the principles of the present disclosure are also applicable to other types of engines, such as low-bypass turbofans, turbojets, turboprops, etc. As shown in FIG. 1, the turbofan engine 100 defines a longitudinal or axial centerline axis ("engine centerline 112") extending therethrough for reference. FIG. 1 also includes an annotated directional diagram with reference to an axial direction A, a radial direction R, and a circumferential direction C. In general, as used herein, the axial direction A is a direction that extends generally parallel to the engine centerline 112, the radial direction R is a direction that extends orthogonally outwardly from the engine centerline 112, and the circumferential direction C is a direction that extends concentrically around the engine centerline 112.

In general, the turbofan engine 100 includes a core turbine or gas turbine engine 114 disposed downstream from a fan section 116. The core turbine 114 includes a substantially tubular outer casing 118 that defines an annular inlet 120. The outer casing 118 can be formed from a single casing or multiple casings. In some examples, the outer casing 118 implements means for housing. The outer casing 118 encloses, in serial flow relationship, a compressor section having a booster or low pressure compressor 122 ("LP compressor 122") and a high pressure compressor 124 ("HP compressor 124"), a combustion section 126, a turbine section having a high pressure turbine 128 ("HP turbine 128") and a low pressure turbine 130 ("LP turbine 130"), and an exhaust section 132. A high pressure shaft or spool 134 ("HP shaft 134") drivingly couples the HP turbine 128 and the HP compressor 124. A low pressure shaft or spool 136 ("LP shaft 136") drivingly couples the LP turbine 130 and the LP compressor 122. The LP shaft 136 can also couple to a fan spool or shaft 138 of the fan section 116. In some examples, the LP shaft 136 is coupled directly to the fan shaft 138 (e.g., a direct-drive configuration). In alternative configurations, the LP shaft 136 can couple to the fan shaft 138 via a reduction gear 139 (e.g., an indirect-drive or geared-drive configuration).

As shown in FIG. 1, the fan section 116 includes a plurality of fan blades 140 coupled to and extending radially outwardly from the fan shaft 138. An annular fan casing or nacelle 142 circumferentially encloses the fan section 116 and/or at least a portion of the core turbine 114. The nacelle 142 can be supported relative to the core turbine 114 by a plurality of circumferentially-spaced apart outlet guide vanes 144. Furthermore, a downstream section 146 of the nacelle 142 can enclose an outer portion of the core turbine 114 to define a bypass airflow passage 148 therebetween. In some examples, the nacelle 142 implements means for housing.

As illustrated in FIG. 1, air 150 enters an inlet portion 152 of the turbofan engine 100 during operation thereof. A first portion 154 of the air 150 flows into the bypass airflow passage 148, while a second portion 156 of the air 150 flows into the inlet 120 of the LP compressor 122. One or more sequential stages of LP compressor stator vanes 170 and LP compressor rotor blades 172 coupled to the LP shaft 136 progressively compress the second portion 156 of the air 150 flowing through the LP compressor 122 en route to the HP compressor 124. Next, one or more sequential stages of HP compressor stator vanes 174 and HP compressor rotor blades 176 coupled to the HP shaft 134 further compress the second portion 156 of the air 150 flowing through the HP compressor 124. This provides compressed air 158 to the combustion section 126 where it mixes with fuel and burns to provide combustion gases 160.

The combustion gases 160 flow through the HP turbine 128 where one or more sequential stages of HP turbine stator vanes 166 and HP turbine rotor blades 168 coupled to the HP shaft 134 extract a first portion of kinetic and/or thermal energy therefrom. This energy extraction supports operation of the HP compressor 124. The combustion gases 160 then flow through the LP turbine 130 where one or more sequential stages of LP turbine stator vanes 162 and LP turbine rotor blades 164 coupled to the LP shaft 136 extract a second portion of thermal and/or kinetic energy therefrom. This energy extraction causes the LP shaft 136 to rotate, which supports operation of the LP compressor 122 and/or rotation of the fan shaft 138. The combustion gases 160 then exit the core turbine 114 through the exhaust section 132 thereof. A turbine frame 161 with a fairing assembly is located between the HP turbine 128 and the LP turbine 130. The turbine frame 161 acts as a supporting structure, connecting a high-pressure shaft's rear bearing with the turbine housing and forming an aerodynamic transition duct between the HP turbine 128 and the LP turbine 130. Fairings form a flow path between the high-pressure and low-pressure turbines and can be formed using metallic castings (e.g., nickel-based cast metallic alloys, etc.).

Along with the turbofan engine 100, the core turbine 114 serves a similar purpose and is exposed to a similar environment in land-based gas turbines, turbojet engines in which the ratio of the first portion 154 of the air 150 to the second portion 156 of the air 150 is less than that of a turbofan, and unducted fan engines in which the fan section 116 is devoid of the nacelle 142. In each of the turbofan, turbojet, and unducted engines, a speed reduction device (e.g., the reduction gear 139) can be included between any shafts and spools. For example, the reduction gear 139 is disposed between the LP shaft 136 and the fan shaft 138 of the fan section 116.

As described above with respect to FIG. 1, the turbine frame 161 is located between the HP turbine 128 and the LP turbine 130 to connect the high-pressure shaft's rear bearing with the turbine housing and form an aerodynamic transition duct between the HP turbine 128 and the LP turbine 130. As such, air flows through the turbine frame 161 between the HP turbine 128 and the LP turbine 130.

During operation of the turbofan engine 100, components of the turbofan engine 100 are exposed to thermal, mechanical, and operational loads that can cause distortions thereof. For example, loads applied to a rotor blade 164, 168, 172, 176 during operation of the turbofan engine 100 can cause the rotor blade 164, 168, 172, 176 undergo a change in shape and/or aerodynamic profile, alter a dimension of the rotor blade 164, 168, 172, 176, etc. and/or a combination thereof. In some examples, a distortion of the rotor blade 164, 168, 172, 176 can lead to increased vibrations in the turbofan engine 100, increase a risk of compressor stall or surge, degrade engine performance, reduce engine efficiency, shorten a life of the rotor blade 164, 168, 172, 176 and/or another component, cause a component to failure, etc. As such, it can be beneficial to detect and/or measure distortion(s) of the rotor blade 164, 168, 172, 176 and/or other components of the turbofan engine 100.

In some examples, one or more of the fan blades 140, the rotor blades 164, 168, 172, 176, the vanes 144, 162, 166, 170, 174, and/or another blade can be coupled to and/or extend from a substrate, such as (but not limited to) a disk, a shroud, a hub, etc. In particular, the substrate is configured to couple the blades to the turbofan engine 100 and/or to hold (e.g., retain, support, etc.) the blades relative to the turbofan engine 100. In some examples, the substrate implements substrate means. In some examples, the substrate implements means for holding.

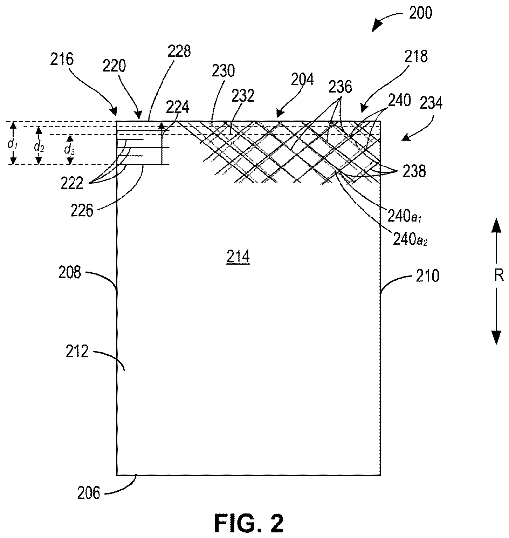

As discussed in further detail below, one or more components of the turbofan engine 100 can include an example reference marker disclosed herein to facilitate measurement of the component(s) to detect distortion thereof. For example, a HP compressor rotor blade 176 of the HP compressor 124 can include a reference marker as disclosed herein (e.g., a reference marker 216, 218, 302, 402, 502, 602, 604, 606, 722, 724 of FIG. 2, 3, 4, 5, 6, 7) displayed on an exposed surface of the rotor blade 176 to facilitate a measure of tip loss based on a tip dimension of the rotor blade 176. More specifically, the reference marker 216, 218, 302, 402, 502, 602, 604, 606, 722, 724 can be displayed on an exposed surface of the rotor blade 176 to enable observation of the reference marker 216, 218, 302, 402, 502, 602, 604, 606, 722, 724 while the rotor blade 176 remains installed in the turbofan engine 100 and/or while the turbofan engine 100 remains installed on an aircraft. In other words, the reference markers 216, 218, 302, 402, 502, 602, 604, 606, 722, 724 as disclosed herein enable inspection of the rotor blade 176 to detect distortion without disassembly of the turbofan engine 100.

As illustrated in FIG. 1, the turbofan engine 100 can include one or more example ports (e.g., an opening, a passage, etc.) in which an example camera 180 can be inserted for inspection of components therein. The camera 180 is an image capture device having an image sensor. The camera 180 of FIG. 1 is part of a non-destructive inspection tool 182 such as, but not limited to, a borescope, a fiberscope, a videoscope, an inspection camera, etc. For example, the camera 180 can be coupled to flexible, rigid, or semi-rigid stem, enabling observation of hard-to-reach areas and inside structures. In some examples, the camera 180 includes a light source to enable observation of poorly lit areas.

The camera 180 can be used to capture images (e.g., image data) of a component of the turbofan engine 100 while the component remains installed in the turbofan engine 100. More specifically, the camera 180 can capture an image of a reference marker disclosed herein on a component of the turbofan engine 100 to facilitate inspection thereof. For example, as illustrated in FIG. 1, the camera 180 can be used to capture an image of the rotor blade 176 having the reference marker 216, 218, 302, 402, 502, 602, 602, 604, 606, 722, 724 displayed thereon. It is understood, however, that the camera 180 can be used to capture images of additional or alternative components of the turbofan engine 100 in other examples.

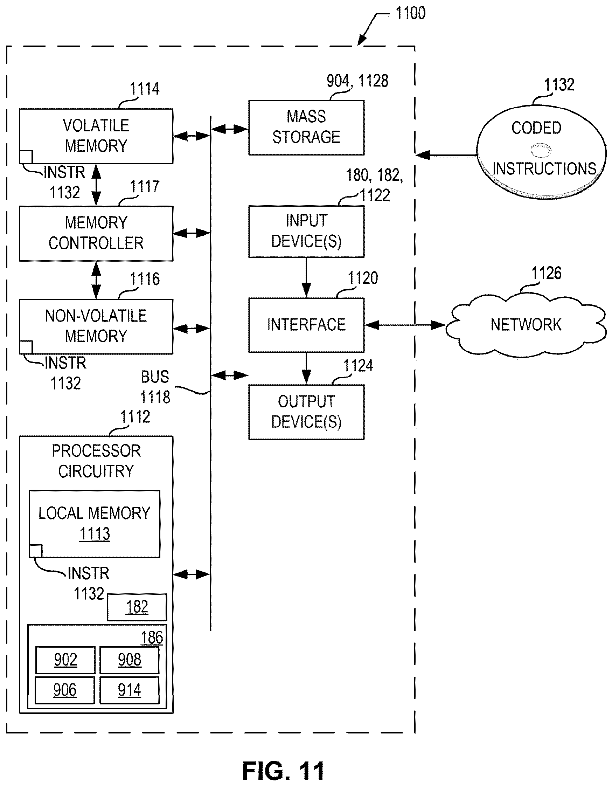

In some examples, the inspection tool 182 includes an articulation system structured to control movements of the camera 180 while the camera 180 is in the turbofan engine 100. For example, the articulation system can be controlled by a user and/or by an electronic device (e.g., a computing device or machine). In some examples, the inspection tool 182 includes a user interface configured to allow a user to view image data, capture an image, and/or control the camera 180. For example, the inspection tool 182 can include a display to allow a user to view image data captured by the camera 180 during an inspection of the turbofan engine 100 and/or a component thereof. In some examples, the inspection tool 182 can be implemented by programmable circuitry (e.g., the programmable circuitry platform 1100 of FIG. 11).

In some examples, the camera 180 captures the images of the reference markers disclosed herein on the components based on a user input. In some examples, the inspection tool 182 is structured to automatically capture one or more images based on detection of a reference marker. For example, certain reference markers disclosed herein can include optically identifiable features that can be detected in image data using a detection algorithm to improve localization of measurement features relative to traditional methods. The inspection tool 182 can include circuitry configured to execute a detection model and/or algorithm to detect, identify, and/or localize such reference markers to capture an image thereof. In other words, the inspection tool 182 can implement an algorithm and/or model trained to identify, detect, localize, and capture an image of a particular reference marker.

To inspect a component of the turbofan engine 100, images of a reference marker disclosed herein on the component as captured by the camera 180 can be used to measure the component to a distortion thereof. For example, the reference marker 216, 218, 302, 402, 502, 602, 604, 606, 722, 724 on the rotor blade 176 as depicted in an image can be used to measure an aspect of the rotor blade 176. In some examples, the reference marker facilitates a measure of a dimension of the rotor blade 176 directly from the image. For example, the reference marker can provide a scale against which a dimension of a tip (e.g., the tip 204 of FIGS. 2-6) of the rotor blade 176 can be measured and compared to previous measurements of the dimension to detect a distortion in the tip. In some examples, the reference marker 216, 218, 302, 402, 502, 602, 604, 606, 722, 724 facilitates a measure of a distortion of the rotor blade 176 directly from the image. For example, the reference marker can provide a scale against which tip loss of the rotor blade 176 can be measured directly. In some examples, the reference marker 216, 218, 302, 402, 502, 602, 604, 606, 722, 724 of the rotor blade 176 can be compared across time to detect a distortion in the rotor blade 176. For example, the reference marker 216, 218, 302, 402, 502, 602, 604, 606, 722, 724 as depicted in a first image at a first time can be compared to the reference marker 216, 218, 302, 402, 502, 602, 604, 606, 722, 724 as depicted in a second image at a second time to detect a distortion in the portion of the rotor blade 176.

As illustrated in FIG. 1, the inspection tool 182 is communicatively coupled to an example computing device 184 (e.g., via a wired and/or wireless connection) structured to facilitate inspection of a component having a reference marker disclosed herein. The computing device 184 can be, for example, a personal computer (PC) (e.g., a laptop, a smartphone, an electronic tablet, a hybrid or convertible PC, etc.), a workstation, a self-learning machine (e.g., a neural network), a mobile device (e.g., a cell phone, a smart phone, a tablet such as an iPadTM), or another type of computing device. In the illustrated example of FIG. 1, the computing device 184 is structured to store example reference or baseline data 190 for use in inspecting and/or measuring a component.

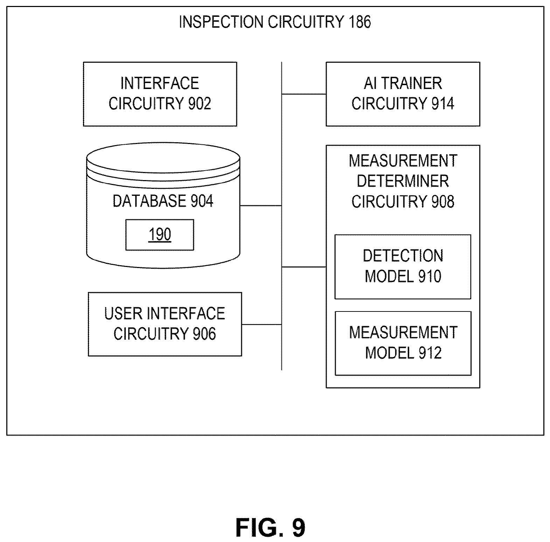

The baseline data 190 can include images captured by the camera 180, associated metadata, information extracted from the images, a library of reference markers, component identification information (e.g., for decoding reference markers and/or storing measurements), baseline measurements for particular components, expected or nominal values for measurements at particular times, etc. The baseline data 190 can be stored in a database (e.g., database 904 of FIG. 9) or other storage circuitry or devices.

The computing device 184 of FIG. 1 includes example inspection circuitry 186, which is structured to analyze image data captured by the camera 180. In particular, the inspection circuitry 186 is structured to facilitate analysis of an image to measure a component based on a reference marker disclosed herein as depicted on the component. In some examples, the image analysis includes detection of a reference marker disclosed herein. For example, the inspection circuitry 186 can implement an object detection technique(s) to detect the reference marker in an image. As used herein, the term "object detection" refers to a computer vision technique that enables a computing device to recognize an object in images (e.g., image data, image frames, etc.). For example, the inspection circuitry 186 can execute an object detection algorithm and/or an object detection model (e.g., an AI-based model).

In some examples, the image analysis includes measurement of a component based on a reference marker disclosed herein. In some examples, the image analysis is implemented by a user via a user interface. For example, the computing device 184 can include a user interface to allow the user to interact with the inspection circuitry 186 to measure the component. In some examples, the image analysis is implemented by the inspection circuitry 186 via an automated inspection technique(s). For example, the inspection circuitry 186 can be configured to leverage AI to detect a reference marker disclosed herein as depicted in an image and/or measure a component using the reference marker displayed thereon. In particular, certain reference markers disclosed herein can be used in conjunction with optical recognition techniques, computer vision techniques, machine vision techniques, and/or other image processing techniques to measure a component. In some such examples, inspection of the turbofan engine 100 and/or a component therein can be completed in less time compared to traditional methods to limit down time of an aircraft to which the turbofan engine 100 is attached. In some examples, reference markings disclosed herein can be leveraged for optical measurement (e.g., clearance measurements, displacements, etc.) during operation of the turbofan engine 100.

A particular reference marker applied to a component is based on a type of distortion to be detected, available measurement techniques, available inspection technology, a location of the component in the turbofan engine 100, environmental conditions and/or loads the component is exposed to during operation of the turbofan engine 100, and/or other factors. For example, the reference marker can be customized to a particular inspection implementation. Certain reference markers disclosed herein provide an on-component length/distance gauge (e.g., a ruler, etc.) against which a measurement can be determined. For example, the on-component length/distance gauge can include spatial marking features having known dimensions that can be used to measure a dimension relative to a tip of an airfoil, an edge of a platform, an upstream and/or downstream edge of an airfoil, etc., which can be indicative of a gap or clearance. In some examples, an on-component length/distance gauge can be used to measure an adjacent component, such as an adjacent surface of a casing or shroud, an adjacent airfoil, etc. For example, the dimensions of the reference marker can be known to enable scaling of the component relative to the marker. Certain references markers disclosed herein can implement an on-component coordinate or reference system against which surface of a component can be inspected to detect a distortion such as creep and shrinkage. For example, the spatial marking features of the reference marker can implement a coordinate system that can be used to compare a geometry of a surface of an airfoil, platform, and/or another component over time. As discussed in further detail below, certain reference markers disclosed herein include features that are detectable and/or measurable by the computing device 184.

Based on the foregoing, the inspection tool 182 and the computing device 184 can operate together to perform automated inspection of the turbofan engine 100 via machine vision techniques. For example, the computing device 184 can obtain data from the camera 180 to enable the inspection circuitry 186 identify, detect, and localize references marker disclosed herein, measure components using the reference markers, generate a report having the measurements, and output the report or display the report via the user interface. An example implementation of the inspection circuitry 186 is described in greater detail in relation to FIG. 9.

In some examples, the camera 180 implements means for capturing an image. In some examples, the inspection circuitry 186 implements means for measuring. In some examples, the camera 180 and/or the inspection tool 182 implement means for inspecting. In some examples, the computing device 184 implements means for determining a measurement. In some examples, the inspection circuitry 186 implements means for inspecting. In some examples, the camera 180, the inspection tool 182, the computing device 184, the inspection circuitry 186, and/or a reference marker disclosed herein implement a measurement system to facilitate inspection of a component of the turbofan engine 100.

FIG. 2 is a schematic illustration of an example component (e.g., a part, a member, a section, etc.) of a gas turbine engine (e.g., the turbofan engine 100 of FIG. 1) having example reference markers disposed thereon in accordance with teachings disclosed herein. In this example, the component is an example airfoil 200 and will be referred to as such moving forward. For example, the airfoil 200 can be an airfoil of a rotor blade 164, 168, 172, 176 (FIG. 1) of the turbofan engine 100. However, in other examples, the component can be another type of component such as (but not limited to) another blade, a non-turning vane, a stator, a platform, a nozzle, a rotor, a casing, a shroud, a disc, a shaft, etc. and/or a component of another type of gas turbine engine.

As illustrated in FIG. 2, the airfoil 200 extends radially between a tip 204 (e.g., blade tip) and a root 206, defining a spanwise direction therebetween. A radial or spanwise distance between the root 206 and the tip 204 defines a radial or spanwise height of the airfoil 200. Further, the airfoil 200 extends between an upstream edge 208 and a downstream edge 210 defining a streamwise direction therebetween. In some examples, the upstream edge 208 is a leading edge of the airfoil 200 and the downstream edge 210 is a trailing edge of the airfoil 200.

The airfoil 200 includes an example first side 212 defined between the upstream edge 208 and the downstream edge 210. For example, the first side 212 can be a pressure side of the airfoil 200 or a suction side of the airfoil 200. The first side 212 of the airfoil 200 includes an example exterior surface 214 (e.g., an external surface, an outer surface, etc.), which is an exposed surface that is visible to an image sensor (e.g., the camera 180 of FIG. 1) while the airfoil 200 remains installed within the turbofan engine 100.

While not illustrated in FIG. 2, the airfoil 200 can be part of a blade assembly that is rotatable about an engine centerline (e.g., the engine centerline 112 of FIG. 1) during operation of the turbofan engine 100. For example, the root 206 of the airfoil 200 can be mountable to a platform (e.g., of a dovetail, a rotatable trunnion, etc.). In some examples, the airfoil 200 can be an airfoil of a blade included in an array of blades of rotor assembly that rotates about the engine centerline 112. Further, while not illustrated in FIG. 2, the tip 204 of the airfoil 200 can be positioned adjacent to a surrounding structure, such as a casing or shroud.

In some examples, a "tip" of an airfoil (also referred to herein as a "blade tip") refers to a radially outer-most surface of the airfoil at a given time. In such examples, the radially outer-most surface of the airfoil at a given time can define (e.g., implement, demarcate, operate as, etc.) the tip of the airfoil at the given time. For example, the airfoil can be a rotatable airfoil coupled to a rotating hub. In some examples, a "tip" of an airfoil (also referred to herein as a "blade tip") refers to a radially inner-most surface of the airfoil at a given time. In such words, the radially inner-most surface of the airfoil at a given time can define the tip of the airfoil at the given time. For example, the airfoil can be a stationary airfoil coupled to a casing or shroud.

The airfoil 200 can experience distortions during operation of the turbofan engine 100 that alter a geometry of the airfoil 200, such as a shape, a dimension, an edge, etc. For example, tip rubbing between the tip 204 and the surrounding structure during operation of the turbofan engine 100 can cause the tip 204 to abrade (e.g., wear down, scrape away, erode etc.), resulting in tip loss that changes a dimension of the airfoil 200. In some examples, the airfoil 200 can deform or warp due to forces imposed by fluid (e.g., air) surrounding the airfoil 200, material properties of the airfoil 200, rotational movement of the airfoil 200 and/or operating conditions, changing a dimension and shape of the airfoil 200. To facilitate measurement of such distortions, the airfoil 200 of FIG. 2 includes example reference markings structured to enable measurements of the airfoil 200 indicative of the distortions.

In the illustrated example of FIG. 2, the airfoil 200 includes an example first reference marker 216 and an example second reference marker 218, each of which is disposed on the exterior surface 214 of the airfoil 200. In this example, the first reference marker 216 is structured to facilitate detection of a first type of distortion and the second reference marker 218 is structured to facilitate detection of a second type of distortion. Specifically, the first reference marker 216 of FIG. 2 is structured to enable measurement of a dimension of the airfoil 200 indicative of tip loss, while the second reference marker 218 of FIG. 2 is structured to enable measurement of deformation of the airfoil 200. In some examples, one or more of the reference markers 216, 218 can be used to measure additional or alternative types of distortions. In some examples, the first reference marker 216 and/or the second reference marker 218 implements means for indicating.

It is understood that the airfoil 200 can include additional or alternative reference markers in other examples. Further, the first and second reference markers 216, 218 of FIG. 2 are displayed on the first side 212 of the airfoil 200. However, in other examples, the first reference marker 216, the second reference marker 218 and/or another reference marker can be positioned on a second side of the airfoil 200 that is opposite the first side 212. Further, while the airfoil 200 of FIG. 2 includes both the first and second reference markers 216, 218, the airfoil 200 can include one of the first reference marker 216 or the second reference marker 218 in other examples.

The reference markers 216, 218 can be used during an inspection of the airfoil 200. For example, during flight, a blade of a gas turbine engine may contact its casing, resulting in wear of the tip of the airfoil, which can be detected by optical inspection for the marker pattern on the airfoil. In some examples, the inspection of the airfoil 200 is conducted after a utilization of the airfoil 200. As used herein, the term "utilization" refers to one or more uses of the component during operation of the turbofan engine. For example, a utilization can refer to a utilization period (e.g., an hour(s), a day(s), week(s), month(s), year(s), etc.), flight hours of an aircraft having engine in which the component is installed, a threshold amount of uses, an amount of rotations, another measure of use, and/or a combination thereof. In some examples, the inspection is conducted based on a trigger, such as hours of flight of an aircraft utilizing the turbofan engine 100, a blade-out event, etc. In some examples, the inspection can be conducted periodically (e.g., annually, quarterly, monthly, etc.) and/or aperiodically.

The first reference marker 216 of FIG. 2 is structured to facilitate a measurement of the airfoil 200 indicative of a tip loss measurement (e.g., a measure of tip loss). Specifically, the first reference marker 216 provides a frame of reference against which a measurement of a dimension of the airfoil 200 indicative of the tip loss measurement can be determined. As used herein, a tip loss measurement refers to an amount of tip loss the airfoil 200 experienced during a utilization. In other words, the tip loss measurement is a measure of an amount of the tip 204 that is abraded during operation of the turbofan engine 100. In some examples, the tip loss measurement can be indicative of an amount of tip rubbing that occurred during the utilization of the airfoil 200 and indicative of a tip clearance (e.g., a gap) between the tip 204 and the surrounding structure during operation of the turbofan engine 100.

The first reference marker 216 includes an example first pattern 220 (e.g., indicator, design, arrangement, configuration, geometry, etc.) configured to enable measurement of an aspect of the airfoil 200 indicative of the tip loss measurement. In particular, the first pattern 220 of FIG. 2 implements an on-component ruler (e.g., a line gauge, a meter stick, etc.) against which a dimension can be determined. Specifically, the first pattern 220 of FIG. 2 includes spatial marking features that form a reference system for measuring a dimension of the airfoil 200. For example, the first pattern 220 includes an array of lines 222 that are substantially parallel (e.g., within +/- 5 degrees) relative to one other. The first pattern 220 also includes a reference datum 226 (e.g., a reference or datum point, line, plane, etc.) structured to orient the first pattern 220 relative to the airfoil 200. In the example of FIG. 2, the reference datum 226 is a radially inward-most line of the lines 222, but can include an additional or alternative feature in other examples.

The lines 222 are fabricated on the airfoil 200 such that radial or spanwise distances therebetween are known. As used herein, the term "known" as it relates to inspection of a component refers to information or data about a pattern, measurement, location, etc. that is determined, predetermined, determinable (e.g., by comparison of data), or otherwise obtainable by an inspector, such as a person or a machine. In other words, dimensions of the spatial marking features are known to enable measurement of the dimension. The lines 222 of the first pattern 220 provide an on-component measurement scale that can be used to determine a dimension of the airfoil 200 relative to the reference datum 226. As used herein, the term "predetermined" as it relates to a reference marker refers to an aspect of the reference marker such as (but not limited to) a location relative to a component, a dimension(s), a pattern, etc. that is defined and fixed (e.g., set, established, etc.). For example, a predetermined dimension of a reference marker can refer to a radial dimension of the reference marker as fabricated on an external surface of a component.

As used herein, the term "scale" (also referred to herein a "measurement scale") as it relates to image-based measurement refers to a dimension of (e.g., length, diameter, etc.) or between (e.g., distance, etc.) spatial marking features of a reference marker as displayed on a component in an image against which the component can be compared measure an aspect thereof. In particular, by displaying spatial marking features having known dimensions, the spatial marking features provide a measurement unit that can be used to determine a measurement of the aspect of the component.

In this example, the first pattern 220 implements a length/distance gauge to determine a linear measurement relative to the tip 204 of the airfoil 200. For example, to help determine tip loss of the airfoil 200, a tip dimension (*dₜ*) of the airfoil 200 can be defined by a distance 224 measured in the radial direction R between the tip 204 and the reference datum 226. The tip dimension *dₜ* is a relative dimension of the tip 204 of the airfoil 200 that defines a height of the tip 204 relative to the reference datum 226. The tip dimension *dₜ* can be indicative of a radial height of the airfoil 200, which is defined between the root 206 and the tip 204 the airfoil 200 at a given moment. In particular, as the tip 204 wears away during operation of the turbofan engine 100, the radial height of the air l200 can decrease. In some examples, a tip dimension *dₜ* as disclosed herein can be indicative of a clearance (e.g., a gap) between adjacent components.

As previously discussed, the tip 204 of the airfoil 200 at a given time is defined by a radially outer-most surface of the airfoil 200 at that time. However as the tip 204 abrades due to tip rubbing, a radially outer-most surface of the airfoil 200 changes. Accordingly, the tip dimension *dₜ* of the airfoil 200 can change over time due to tip rubbing. The first pattern 220 can be used to determine a respective value of the relative tip dimension *dₜ* of the airfoil 200 at different times (e.g., a first time, a second time, a third time, etc.) to monitor changes the tip dimension *dₜ* over time to detect and measure tip loss. At a given time, the tip dimension *dₜ* of the airfoil 200 is defined by a distance 224 measured between the reference datum 226 and a radially outer-most surface of the airfoil 200 defining the tip 204 at that time.

The first reference marker 216 is displayed on a portion of the airfoil 200 that enables measurement of the tip dimension *dₜ*. In this example, the first reference marker 216 of FIG. 2 is positioned adjacent the tip 204 of the airfoil 200 and adjacent the upstream edge 208 of the airfoil 200. However, the first reference marker 216 can be positioned in other locations on the first side 212 that enable a measure of the tip dimension *dₜ* such as, but not limited to, adjacent the downstream edge 210, at another radial position, etc. and/or on the second side of the airfoil 200. That is, while the first reference marker 216 is positioned on a portion of the airfoil 200 at which the first type of distortion occurs, the first reference marker 216 can be positioned at any portion of the airfoil 200 that enables the measurement of the first type of distortion. In some examples, a location of the first reference marker 216 and/or a geometry of the first pattern 220 as fabricated on the airfoil 200 is known, and can be included in baseline or reference data (e.g., the baseline data 190 of FIG. 1) that is associated the airfoil 200. For example, the location can be stored in a database (e.g., in the database 904 of FIG. 9) and associated with the airfoil 200.

The first pattern 220 enables measurements of the tip dimension *dₜ* of the airfoil 200 to be determined based on image data (e.g., images) of the first reference marker 216 on the airfoil 200 as captured by a camera (e.g., the camera 180 of FIG. 1). In particular, the first pattern 220 is displayed on the airfoil 200 such that the first pattern 220 is visible in captured images of the first reference marker 216 on the airfoil 200. As such, the first pattern 220 of the first reference marker 216 provides a visual scale that can be repeatedly used to determine the distance 224 to measure the tip dimension *dₜ* at different times to detect and monitor tip loss. In particular, the tip dimension *dₜ* of the airfoil 200 can be determined based on an analysis of an image of the first pattern 220 on the airfoil 200.

In other words, the first pattern 220 enables measurements of the tip dimension *dₜ* to be determined using the images captured at different times to monitor the tip 204 of the airfoil 200 over time. For example, the airfoil 200 of FIG. 2 is depicted at a first time prior to a first utilization. In this example, the first utilization is defined as a first utilization period (e.g., an amount of flight hours of an aircraft during which the turbine engine 100 operates the airfoil 200), but can be defined differently in other examples, (e.g., such as an amount of rotations of the airfoil 200, a threshold distance the aircraft travels, a threshold amount of departures, etc.). For example, the first utilization may correspond to 100 hours of flight of the aircraft having the turbine engine 100 in which the airfoil 200 is installed. However, the first utilization can include a greater amount of time (e.g., more than 100 hours) or lesser amount of time (e.g., less than 100 hours) in other examples.

In this example, the lines 222 are fabricated at approximately 4 mil (0.004 inch) intervals. As used herein, a mil is a unit of measurement that is equal to one-thousandth of an inch (in), or 0.001 inches (in). In other words, a radial distance between two adjacent lines 222 in FIG. 2 is approximately 4 mil (e.g., within +/- 0.5 mil). However, it is understood that the lines 222 can be arranged at large intervals (e.g., 3 mil, 5 mil, 10 mil, etc.) and/or smaller intervals (e.g., 1 mil, 0.5 mil, etc.) in other examples. In some examples, the first pattern 220 can include more lines to enable more granular measurements.

As illustrated in FIG. 2, a first surface 228 of the airfoil 200 defines the tip 204 of the airfoil 200 at the first time. That is, the first surface 228 is the radially outer-most surface of the airfoil 200 at the first time. A measure of the distance 224 between the reference datum 226 and the first surface 228 of the airfoil 200 defines a first tip dimension (denoted *d*₁) of the airfoil 200. Specifically, the first tip dimension *d*₁ of the airfoil 200 is defined between the reference datum 226 and the tip 204 of the airfoil 200 at the first time.

As illustrated in the example FIG. 2, the distance 224 between the first surface 228 and the reference datum 226 of FIG. 2 is approximately 10 mil (e.g., within +/- 1 mil). Thus, the first tip dimension *d*₁ corresponding to the tip 204 of the airfoil 200 at the first time is approximately 10 mil. It is understood, however, that the first dimension *d*₁ can be larger (e.g., more than 10 mil) or smaller (e.g., less than 10 mil) in other examples. The first tip dimension *d*₁ can be determined based on a first image of the airfoil 200 corresponding to an image of the airfoil 200 at the first time. Specifically, the first image can depict the first reference marker 216 on the airfoil 200 at the first time.

Due to the depiction of the first reference marker 216 on the airfoil 200 at the first time, an analysis of the first image of the reference marker 216 can be executed (e.g., by a person and/or a computing device) to determine the first tip dimension *d*₁. For example, based on the first image, the analysis can be performed to determine that there are four of the lines 222 between the reference datum 226 and the tip 204. Further, a distance between a radially outer-most one of the lines 222 to the tip 204 is approximately 2 mil based on a comparison between the distance and those between the lines 222. In other words, the optical features of the first reference marker 216 as depicted in the first image enables the tip 204 can be measured against the first pattern 220 to determine the first tip dimension *d*₁ upon visual analysis of the first image and/or based on image analysis techniques implemented by the computing device 184 (FIG. 1).

In some examples, the first tip dimension *d*₁ is a first baseline measurement that can be included in the baseline data 190 and associated the airfoil 200 at the first time. For example, the first baseline measurement can be stored in a database (e.g., in the database 904 of FIG. 9) and associated with the airfoil 200 at a time prior to the first utilization. In some examples, the first tip dimension *d*₁ is known prior to the first utilization of the airfoil 200.

During the first utilization, the tip 204 of the airfoil 200 can rub against a surrounding structure, causing the first surface 228 airfoil 200 to abrade. In particular, such tip rubbing between the tip 204 and the surrounding structure during the first utilization can cause the first surface 228 of the airfoil 200 to erode or wear away, revealing an example second surface 230 of the airfoil 200 (shown in dashed line).

At a second time after the first utilization of the airfoil 200, the second surface 230 may be a radially outer-most surface of the airfoil 200 such that second surface 230 of the airfoil 200 defines the tip 204 of the airfoil 200 at the second time. A measure of the distance 224 between the reference datum 226 and the second surface 230 of the airfoil 200 at the second time defines a second tip dimension (denoted *d*₂) of the airfoil 200. That is, the second tip dimension *d*₂ of the airfoil 200 is defined between the reference datum 226 and the tip 204 of the airfoil 200 at the second time.

As illustrated in FIG. 2, the distance 224 between the second surface 230 and the reference datum 226 is approximately 9 mil (e.g., within +/- 1 mil). In particular, the second tip dimension *d*₂ is approximately 9 mil. It is understood, however, that the second tip dimension *d*₂ can be larger (e.g., more than 9 mil) or smaller (e.g., less than 9 mil) in other examples. The distance 224 of the second tip dimension *d*₂ can be determined based on a second image of the airfoil 200 corresponding to an image of the airfoil 200 at the second time. In particular, the second image can depict the first reference marker 216 on the airfoil 200 at the second time.

As illustrated in FIG. 2, the first pattern 220 provides a scale that enables measurement of the second surface 230 relative to a reference datum 226 based on the second image. Accordingly, due to the depiction of the first pattern 220 on the airfoil 200 at the first time, the tip 204 can be measured against the first pattern 220 to determine the second tip dimension *d*₂ based on the second image. For example, an analysis can be performed on the second image to determine that there are four of the lines 222 between the reference datum 226 and the second surface 230. Further, a distance between a radially outer-most one of the lines 222 at the second time relative to the second surface 230 is approximately 2 mil based on a comparison between the distance and those between the lines 222. In other words, the optical features of the first pattern 220 provide a scale against which the tip dimension *dₜ* can be repeated determined based on upon visual analysis.

In some examples, the second tip dimension *d*₂ is a second baseline measurement of the tip dimension *dₜ* that is known prior to a second utilization of the airfoil 200. In some examples, the second baseline measurement can be included in the baseline data 190 (FIG. 1) associated with the airfoil 200. For example, the second baseline measurement can be stored in a database (e.g., in the database 904 of FIG. 9) and associated with the airfoil 200 at the second time.

During the second utilization, the second surface 230 of the airfoil 200 can be worn away, revealing an example third surface 232 of the airfoil 200 (shown in dashed line), which may be the radially outer-most surface of the airfoil 200 at a third time. In such instances, the third surface 232 of the airfoil 200 defines the tip 204 of the airfoil 200 at the third time. A measure of the distance 224 between the reference datum 226 and the third surface 232 defines a third tip dimension (denoted *d*₃) of the airfoil 200 that corresponds to the airfoil 200 at the third time.

As illustrated in FIG. 2, the distance 224 between the third surface 232 and the reference datum 226 is approximately 7 mil (e.g., within +/- 1 mil). That is, the third tip dimension *d*₃ is approximately 7 mil. It is understood, however, that the third tip dimension *d*₃ can be larger (e.g., more than 7 mil) or smaller (e.g., less than 7 mil) in other examples. The distance 224 of the third tip dimension *d*₃ can be determined based on a third image of the airfoil 200 corresponding to an image of the airfoil 200 at the third time. Specifically, the third image can depict the first reference marker 216 on the airfoil 200 at the third time. Again, the first reference marker 216 provides a scale that enables accurate measurement of the third surface 232 relative to a reference datum 226 based on the second image. In other words, due the depiction of the first pattern 220 on the airfoil 200 at the third time, the tip 204 can be measured against the first pattern 220 using the third image to determine the third tip dimension *d*₃.

As illustrated in FIG. 2, a radially outward line 222 of the first pattern 220 may have been abraded away. However, the third tip dimension *d*₃ is determined relative to the reference datum 226, which is still visible, enabling accurate measurement of the third tip dimension *d*₃. In some examples, the third tip dimension *d*₃ is a third baseline measurement of the tip dimension *dₜ* that is known prior to a third utilization of the airfoil 200. In some examples, the third baseline measurement can be included in the baseline data 190 (FIG. 1) associated with the airfoil 200. For example, the third baseline measurement can be stored in a database (e.g., in the database 904 of FIG. 9) and associated with the airfoil 200 at the third time.

The baseline data 190 associated with the airfoil 200 can be used to monitor or track tip loss and tip clearance for the airfoil 200 over time. The baseline data 190 can include previous measurements of the distance 224 determined based on the first pattern 220 (e.g., the first tip dimension *d*₁, second tip dimension *d*₂, and third tip dimension *d*₃, etc.) as well as other information, such as, but not limited to, an expected or nominal value for the dimension *dₜ* at a particular time, information about the first pattern 220 (e.g., the pre-defined intervals, etc.), information about the first reference marker 216 (e.g., a location of the reference marker 216 on the airfoil 200, etc.), etc. In some examples, a tip dimension *dₜ* at a particular time can be compared to an expected value of the tip dimension *dₜ* at that time to determine if the airfoil 200 is operating as expected. In some examples, measurements of the tip dimension *dₜ* can be compared over a time period to determine a rate of distortion or deterioration that the airfoil 200 experienced during the time period. For example, a difference between the first tip dimension *d*₁ and the third tip dimension *d*₃ is indicative of an amount of tip loss the airfoil 200 experienced between the first time and the third time. In some examples, the baseline data 190 can be used to determine an amount of tip loss the airfoil 200 experienced during one or more utilizations. For example, a difference between the first tip dimension *d*₁ and the second tip dimension *d*₂ is indicative of an amount of tip loss the airfoil 200 during the first utilization. Further, a difference between the second tip dimension *d*₂ and the third tip dimension *d*₃ is indicative of an amount of tip loss the airfoil 200 during the second utilization. In other words, over time, as the turbofan engine 100 is used in flight, the tip 204 of the airfoil 200 is worn. This wear can be identified based on distances between the lines, stripes, or other markers relative to the tip 204 that are made visible at the tip 204 on the airfoil 200.

In the example of FIG. 2, the first tip dimension *d*₁ of the airfoil 200 corresponding to the tip 204 of the airfoil 200 at the first time is approximately 10 mil, the second tip dimension *d*₂ of the airfoil 200 corresponding to the tip 204 of the airfoil 200 at the second time is approximately 9 mil, and the third tip dimension *d*₃ corresponding to the tip 204 of the airfoil 204 at the third time is approximately 7 mil. Based on a comparison of the first tip dimension *d*₁ and the second tip dimension *d*₂, the airfoil 200 of FIG. 2 experienced 1 mil of tip loss during the first utilization. In other words, about 1 mil of the tip 204 abraded away during the first utilization such that a tip loss measurement associated with the first utilization is approximately 1 mil. The 1 mil of wear caused during the first utilization is revealed based on analysis of the reference marker 216 made visible on the airfoil 200.

A comparison of the second tip dimension *d*₂ and third tip dimension *d*₃ reveals that the airfoil 200 of FIG. 2 experienced 2 mil of tip loss during the second utilization. In other words, about 2 mil of the tip 204 abraded away during the second utilization such that a tip loss measurement associated with the second utilization is approximately 2 mil. The 1 mil of wear cause during the second utilization is revealed based on visual analysis of the reference marker 216 made visible on the airfoil 200. Further, based on a comparison of the first tip dimension *d*₁ and the third tip dimension *d*₃, the airfoil 200 of FIG. 2 experienced approximately 3 mil of tip loss between the first time and third time. In other words, about 3 mil of the tip 204 abraded away during a period between the first time and the third time such that a tip loss measurement associated with the period is about 3 mil. The 3mil of wear cause during the first and second utilizations is revealed based on analysis of the reference marker 216 made visible on the airfoil 200.

In some examples, the reference marker 216 can provide a visual scale for inspections of hardware adjacent to the airfoil 200. For example, the reference marker 216 can provide to measure an aspect of the surrounding structure relative to the reference marker 216 based on an image of the first pattern 220. In some examples, the reference marker 216 can provide a scale that could be used to validate and/verify dimensions of adjacent features during an inspection.

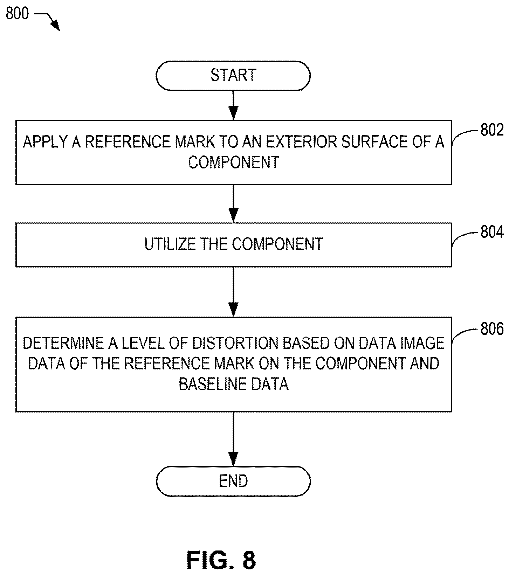

In some examples, an analysis of an image of the reference marker 216 can be executed by a person based on a visual analysis of the reference marker 216 as depicted in the image. In some examples, the image analysis can be executed by via an electronic device (e.g., the computing device 184 of FIG. 1, etc.) based on image data corresponding to the image. For example, the image analysis can be executed via a user (e.g., a person using a user interface) and/or by one or more computer vision techniques. In some examples, the analysis of the image includes detection of the reference marker 216 in the image. In some such examples, the computing device 184 (e.g., using the inspection circuitry 186 of FIGS. 1 and 8) can execute an object detection algorithm and/or an object detection model (e.g., an AI-based model) to automatically detect the reference marker 216 based on the features of the first pattern 220.

The first reference marker 216 provides for improved measurement of tip loss relative to traditional tip notch methods. In particular, due to the first pattern 220, which implements an on-component ruler, more accurate tip loss measurements can be obtained. In some examples, the reference marker 216 allows for measurement accuracy of 1 mil (0.001 in or 0.00254 mm).

The first reference marker 216 provides for repeatable installation of a scale that enables measurement of a dimension of the airfoil 200 relative to a reference datum 226. The first reference marker 216 can be deposited on one or more airfoils 200 of a rotor assembly. For example, the reference marker 216 can be displayed on a subset of airfoils 200 of a rotor assembly. In other examples, the first reference marker 216 can be deposited on each airfoil of a rotor. For example, the reference marker 216 can be added to a manufacturing process such that the reference marker 216 is applied to each airfoil 200 during fabrication of the airfoil 200. In some examples, the inclusion of the first reference marker 216 on each airfoil 200 or a majority of the airfoils 200 of a rotor assembly can facilitate faster inspection of the turbofan engine 100 by allowing any of the airfoils 200 to be inspected rather than identifying, detecting, and localizing a particular airfoil 200 having a reference marker thereon.

In some examples, the first pattern 220 enables faster analysis of images and more rapid inspection of the airfoil 200. In some such examples, the first pattern 220 facilitates faster turnaround time from inspection to engine/aircraft release when on a flight line. In some examples, the reference datum 226 can include a feature that is detectable by an electronic device (e.g., the computing device 184 of FIG. 1, etc.) via a detection model and/or algorithm. In some such examples, such detectable features can further improve a speed at which an inspection can be completed, allowing more time on-wing.

It is understood that the first reference marker 216 of FIG. 2 is provided for purposes of illustration, and can differ in other examples. For example, distances between the lines can be larger or smaller. In some examples, the first pattern 220 of the first reference marker 216 can include more lines or less lines than illustrated in FIG. 2. For example, the first pattern 220 can include more lines to enable more granular measurements. While the lines 222 of FIG. 2 have differing lengths, in other examples, the lines 222 can include the same length, as well as alternative lengths. In some examples, the lines 222 and/or the reference datum 226 can have different appearances (e.g., dotted lines, dashed lines, etc.), different thickness, and/or other characteristics. In some examples, the lines 222 and/or the reference datum 226 can be implemented by other geometrical or non-geometrical shapes (e.g., circles, boxes, stars, etc.) such that the lines are identifiable and can be used to measure the distance 224 between the tip 204 and the reference datum 226.

The airfoil 200 of FIG. 2 also include the second reference marker 218, which is structured to facilitate detection of deformation of the airfoil 200. The second reference marker 218 provides a frame of reference against which a measurement indicative of a change to a geometric shape of the airfoil 200 can be determined. For example, the second reference marker 218 can be used to facilitate measurement indicative of shrinkage, creep, deflection, and/or another type of warpage.

The second reference marker 218 includes an example second pattern 234 (e.g., indicator, design, arrangement, configuration, geometry, etc.) configured to enable measurement of an aspect of the airfoil 200 indicative of deformation. The second pattern 234 includes spatial marking features that can be used to define a geometry of the exterior surface 214 of the airfoil 200 at a particular time. In particular, the second pattern 234 implements an on-component coordinate or reference system (e.g., a spatial index) against which a measurement of deformation can be determined. As illustrated in FIG. 2, the second pattern 234 is a cross-hatch pattern (e.g., a grid, crisscross pattern, etc.) that includes first lines 236 and second lines 238 that cross over each other to form intersections 240. The positions of the lines 236, 238 and the intersections 240 facilitate the coordinate system against which to measure the deformation.

Accordingly, the second pattern 234 provides another on-component measurement scale that can be used to measure an aspect of the airfoil 200. The second pattern 234 implements a pre-defined pattern against which a geometry of the airfoil 200 can be determined. In particular, the second pattern 234 at a given time defines a geometry of the airfoil 200 at that time. However, the second pattern 234 can change over time due to the deformation of the airfoil 200. Thus, the second pattern 234 at the given time can be compared to the second pattern 234 at a subsequent time to determine how the geometry of the airfoil 200 changed. Further, by tracking how coordinates of the second pattern 234 change over time, accurate measurement of hardware creep, shrinkage, and/or other hardware deflection can be detected and measured.

The second pattern 234 enables measurements of the deformation of the airfoil 200 to be determined based on image data (e.g., images) of the second reference marker 218 on the airfoil 200 as captured by the camera 180 (FIG. 1). Like the first pattern 220, the second pattern 234 is displayed on the airfoil 200 such that the second pattern 234 is visible in captured images of the second reference marker 218 on the airfoil 200. The second pattern 234 provides an on-component measurement scale that can be repeatedly used to determine how the airfoil 200 deformed during operation of the turbofan engine 100. In other words, the second pattern 234 enables measurements of the airfoil 200 to be determined using the images captured at different times to monitor deformations of the airfoil 200 over time. For example, first data for the second pattern 234 associated with the airfoil 200 at a first time can be compared with second data for the second pattern 234 associated with the airfoil 200 at a second time to identify a level of deformation of the airfoil 200 between the first time and the second time.

For example, the airfoil 200 of FIG. 2 is depicted at the first time prior to the first utilization. The first data can include the first image of the airfoil 200 corresponding to the image of on the airfoil 200 at the first time. Specifically, the first image can depict the second reference marker 218 on the airfoil 200 at the first time. Based on the first image, first coordinates (e.g., first locations of the intersections 240 and the lines 236, 238) of the second pattern 234 before a first utilization can be determined. The first coordinates define a first shape of the airfoil 200 prior to the first utilization.

In some examples, the first data is a first baseline measurement for the second reference marker 218 that can be included in the baseline data 190 (FIG. 1) and associated with the airfoil 200 at the first time. For example, the first baseline measurement for the second reference marker 218 can be stored in a database (e.g., in the database 904 of FIG. 9) and associated with the airfoil 200 at a time prior to the first utilization. In some examples, the first data is known prior to the first utilization of the airfoil 200.

The second data can include the second image of the airfoil 200 corresponding to the image of on the airfoil 200 at the second time. Specifically, the second image can depict the second reference marker 218 on the airfoil 200 at the second time after the first utilization. Based on the second image, second coordinates (e.g., second locations of the intersections 240 and the lines 236, 238, shown in gray) of the second pattern 234 after the first utilization can be determined. The second coordinates define a second shape of the airfoil 200 after the first utilization. In particular, the second coordinates define the second shape of the airfoil 200 caused by deformation of the airfoil 200 during the first utilization (e.g., during the 100 hours of flight time). The first coordinates can be compared to the second coordinates to identify, detect, localize, and/or measure the deformation the airfoil 200 experienced during the first utilization. For example as illustrated in FIG. 2, a first intersection at the first time (denoted 240*a*₁) may be in a different location relative to the first intersection at the second time (denoted 240*a*₂) due to distortion of the airfoil 200 during the first utilization.

In some examples, the second data is a second baseline measurement for the second reference marker 218 that can be included in the baseline data 190 (FIG. 1) and associated with the airfoil 200 at the second time. For example, the second baseline measurement for the second reference marker 218 can be stored in a database (e.g., in the database 904 of FIG. 9) and associated with the airfoil 200 at a time prior to the second utilization.

In this example, the second reference marker 218 is positioned adjacent the tip 204 of the airfoil 200 and adjacent to the downstream edge 210 of the airfoil 200. Accordingly, the second reference marker 218 enables detection of deformation that occurs at a downstream tip of the airfoil 200. It is understood however, that the second reference marker 218 can be positioned in additional or alternative locations in other examples. For example, the second reference marker 218 can be positioned at other locations on the first side 212 such as, but not limited to, adjacent the upstream edge 208, at another radial position, etc., and/or on the second side of the airfoil 200. In some examples, the second reference marker 218 is positioned at a portion of the airfoil 200 at which a deformation is expected to occur. For example, the second reference marker 218 can be deposited in one or more locations known to experience various forces during operation. It is understood, however, that the second reference marker 218 can be positioned on any surface of the airfoil 200. In some examples, a location of the second reference marker 218 and/or a geometry of the second pattern 234 as fabricated on the airfoil 200 is known, and can be included in reference or baseline data (e.g., the baseline data 190 of FIG. 1) that is associated the airfoil 200.

It is understood that the second reference marker 218 of FIG. 2 is provided for purposes of illustration and explanation, and can differ in other examples. For example, the second reference marker 218 can include other types of cross-hatch patterns in other examples. For example, angles between intersected lines of the second pattern 234 can be larger or smaller in other examples. In some examples, distances between parallel lines of the second pattern 234 can be larger or smaller. Further, the lines of the second pattern 234 can have different appearances (e.g., dotted lines, dashed lines, etc.), have different thickness, etc.

The reference markers 216, 218 are applied to the exterior surface 214 of the airfoil 200 via one or more marking techniques. In some examples, one or more of the reference markers 216, 218 include subtractive features that are recessed (e.g., depressed) into the exterior surface 214 of the airfoil 200, 300, 400, 500, 600. For example, the subtractive features can be applied to the exterior surface 214 of the airfoil 200, 300, 400, 500, 600 via one or more of laser marking, laser etching, chemical etching, peening, and/or another removal technique. In some examples, one or more of the reference markers 216, 218 include additive features added (e.g., affixed, appended, adhered, etc.) onto the exterior surface 214 of the airfoil 200, 300, 400, 500, 600. For example, the subtractive features can be applied to the exterior surface 214 of the airfoil 200, 300, 400, 500, 600 via one or more of stamping, printing, painting, a coating and masking technique, and/or another additive technique.

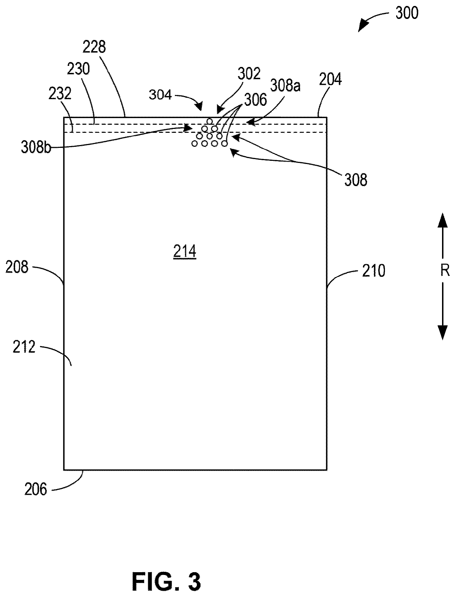

Example airfoils having example reference markers are disclosed below that are similar to the airfoil 200 of FIG. 2. Many of the aspects of the airfoils 300, 400, 500, 600 of FIGS. 3-6 are substantially similar or identical to the aspects described above in connection with the airfoil 200 of FIG. 2. As such, those aspects will not be described in detail again below. Instead, the interested reader is referred to the above corresponding descriptions for a complete written description of the structure and operation of such aspects. Further, the same reference numbers used for the structures shown in FIG. 2 are used for similar or identical structures in FIGS. 3-6.

Further, example reference markers are disclosed below that are similar to the first reference marker 216 and/or the second reference marker 218 of FIG. 2. Many of the aspects of the reference markers 302, 402, 502, 602, 722, 724 of FIGS. 3-7 are substantially similar or identical to the aspects described above in connection with the reference marker(s) 216, 218 of FIG. 2. As such, those aspects will not be described in detail again below. Instead, the interested reader is referred to the above corresponding descriptions for a complete written description of the structure and operation of such aspects. Further, the same reference numbers used for the structures shown in FIG. 2 are used for similar or identical structures in FIGS. 3-7.

FIG. 3 is a schematic illustration of an example airfoil 300 of a gas turbine engine (e.g., the turbofan engine 100 of FIG. 1) having an example reference markings disposed thereon in accordance with teachings disclosed herein. The airfoil 300 of FIG. 3 is an airfoil of a rotor blade (e.g., rotor blade 164, 168, 172, 176 of FIG. 1) but can be another type of component in other examples such as (but not limited to) another blade, a non-turning vane, a stator, a platform, a nozzle, a rotor, a casing, a shroud, a disc, a shaft, etc. and/or a component of another type of gas turbine engine. The airfoil 300 of FIG. 3 is substantially similar or identical to the airfoil 200 of FIG. 2. However, the airfoil 300 of FIG. 3 includes another example reference marker 302 disclosed herein. The reference marker 302 of FIG. 3 is structured to facilitate measure of tip loss of the airfoil 300, but can be used to measure other types of distortions in additional or alternative examples, such as (but not limited to) measurements indicative of a gap, measurements of another type of edge (e.g., the upstream edge 208, the downstream edge 210, etc.). In some examples, the reference marker 302 implements means for indicating.

As illustrated in FIG. 3, the reference marker 302 of FIG. 3 is disposed on the exterior surface 214 of the airfoil 200 adjacent a tip 204 of the airfoil 300. The reference marker 302 can be fabricated via one or more marking techniques such as, but not limited to, laser marking, chemical etching, stamping, ink printing, coating and masking, pending, etc. The reference marker 302 includes an example pattern 304 (e.g., indicator, design, arrangement, configuration, geometry, etc.) configured to enable the tip loss measurement. In particular, the pattern 304 of FIG. 3 includes spatial marking features that provide a reference system for determining an amount of the tip 204 that is abraded during operation of the turbofan engine 100. For example, the pattern 304 of FIG. 3 includes a pyramid or triangle arrangement of optically identifiable objects 306 (e.g., shapes). The pattern 304 of FIG. 3 includes rows 308 of the objects 306. In the example of FIG. 3, the different rows 308 of the pattern 304 provide different reference planes against which the airfoil 300 can be oriented.

The pattern 304 of FIG. 3 enables measurements of the tip loss to be determined based on images of the reference marker 302 on the airfoil 300 as captured by a camera (e.g., the camera 180 of FIG. 1). In particular, the pattern 304 is displayed on the airfoil 300 such that the pattern 304 is visible in images captured of the reference marker 302 on the airfoil 300. In some examples, the tip loss measurement can be indicative of an amount of tip rubbing that occurred during the utilization of the airfoil 300 and indicative of a tip clearance (e.g., a gap) between the tip 204 and the surrounding structure during operation of the turbofan engine 100.

To help enable measurement of tip loss, the objects 306 are fabricated on the airfoil 300 such that one or more dimensions of the objects 306 are known. For example, in FIG. 3, a diameter of each object 306 may be known based on fabrication of the objects 306 on the exterior surface 214 of the airfoil 300. Thus, the objects 306 of the pattern 304 provide an on-component scale against which the tip loss measurement can be determined. More specifically, the pattern 304 provides a measurement scale that can be repeatedly used to determine the tip loss measurement at different times to determine tip loss caused during operation of the turbofan engine 100. The tip loss measurement of the airfoil 300 can be determined based on a visual analysis of the reference marker 302 as depicted in an image and/or based on analysis of image data corresponding to the image (e.g., via computer vision techniques).

In the example of FIG. 3, each of the objects 306 has a diameter of approximately 2 mil (e.g., within +/- 1 mil). However, it is understood that the objects 306 can have larger diameters (e.g., 3 mil, 5 mil, 10 mil, etc.) and/or smaller diameters (e.g., 1 mil, 0.5 mil, etc.) in other examples. In other words, the dimensions of the spatial marking features of the reference marker 302 of FIG. 3 are known to facilitate measurement of the airfoil 300. In some examples, the reference marker 302 implements a length/distance gauge to determine a linear dimension relative to the tip 204 of the airfoil 300.

The pattern 304 enables measurements of the tip loss to be determined using the images captured at different times to monitor the tip 204 of the airfoil 200 over time. For example, the airfoil 300 of FIG. 3 is depicted at a first time prior to a first utilization. In this example, the first utilization is an initial utilization such that the airfoil 300 has not been used at the first time. Accordingly, the pattern 304 illustrated in FIG. 3 represents the pattern 304 as fabricated on the airfoil 300, and a tip loss measurement at the first time is zero. In other examples, however, the first utilization is another utilization such that the pattern 304 illustrated in FIG. 3 represents the pattern 304 after a previous utilization. In some examples, a first image of the airfoil 300 corresponding to the airfoil 300 at the first time can be included as baseline data 190 for the airfoil 300.

The tip loss measurement can be determined based on a count of the objects 306 and/or rows 308 as depicted the first image of the reference marker 302 on the exterior surface 214 of the airfoil 300. The tip 204 of the airfoil 300 in FIG. 3 is defined by a first surface 228 of the airfoil 300 at the first time. The pattern 304 at the first time includes ten objects 306 arranged in four rows 308. Each row 308 has one or more objects 306, meaning that each row 308 in FIG. 3 has a radial dimension of approximately 2 mil. Further, a radial dimension of the pattern 304 is approximately 8 mil. The pattern 304 as fabricated on the airfoil 300 has a radial dimension of approximately 8 mil, indicating that the tip loss measurement at the first time is zero.

Additionally or alternatively, the tip loss measurement can be determined based on identifying that one or more of the objects 306 are no longer visible on the exterior surface 214 of the airfoil 300 as depicted in the image. The pattern 304 at the first time includes ten objects 306 arranged in four rows 308. The pattern 304 as fabricated on the airfoil 300 includes ten objects 306 arranged in four rows 308, indicating that the tip loss measurement at the first time is zero.

During the first utilization, the tip 204 of the airfoil 300 can rub against a surrounding structure. Such tip rubbing between the tip 204 and the surrounding structure can cause the first surface 228 of the airfoil 200 to erode, revealing a second surface 230 of the airfoil 300 (shown in dashed line). At a second time after the first utilization of the airfoil 300, the second surface 230 may be a radially outer-most surface of the airfoil 200 such that the second surface 230 defines the tip 204 of the airfoil 300 at the second time.

A first tip loss dimension of the airfoil 300 can be determined based on analysis of a second image of the airfoil 300 corresponding to an image of the reference marker 302 on the airfoil 300 at the second time. Specifically, due to the depiction of the reference marker 302 on the airfoil 300, the tip 204 can be measured against the pattern 304 to determine the first tip loss measurement. For example, the second surface 230 implements the tip 204 in FIG. 3.

Based on a visual analysis of the second surface 230 as depicted in FIG. 3, the first tip loss measurement can be determined based on a count of the objects 306 and/or based on a count of the rows 308. In particular, as illustrated in FIG. 3, three rows 308 remain visible in the pattern 304 after the first utilization. Because the rows 308 have a radial dimension of approximately 2 mil, an analysis of the second image of the airfoil 300 reveals that 2 mil of the tip 204 abraded away during the first utilization. In other words, the first tip loss measurement associated with airfoil 300 during the first utilization is 2 mil, and the airfoil 300 experienced 2 mil of tip loss during the first utilization.

Additionally or alternatively, based on a visual analysis of the second surface 230 as depicted in FIG. 3, the first tip loss measurement can be determined based on a determination that one or more of the objects 306 and/or the rows 308 is no longer visible on the exterior surface 214 of the airfoil 300. In particular, as illustrated in FIG. 3, three rows 308 remain visible on the exterior surface 214 at the second time, while a first row 308a of the objects 306 is no longer visible on the exterior surface 214 of the airfoil 300 at the second time. In other words, the image of the reference marker 302 at the second time reveals that the first row 308a of the objects 306 abraded away during the first utilization. Because the first row 308a has a radial dimension of approximately 2 mil, an analysis of the second image of the airfoil 300 reveals that 2 mil of the tip 204 abraded away during the first utilization.

During a second utilization of the airfoil 300, tip rubbing between the tip 204 and the surrounding structure can cause the second surface 230 of the airfoil 200 to erode, revealing a third surface 232 of the airfoil 300 (shown in dashed line). At a third time after the second utilization of the airfoil 300, the third surface 232 can define the tip 204 of the airfoil 300. A second tip loss dimension of the airfoil 300 can be determined based on a third image of the airfoil 300 corresponding to an image of the reference marker 302 on the airfoil 300 at the third time. Specifically, due to the depiction of the reference marker 302 on the airfoil 300, the tip 204 can again be measured against the pattern 304 to determine the second tip loss measurement. For example, the third surface 232 implements the tip 204 in FIG. 3.

Based on a visual analysis of the third surface 232 as depicted in FIG. 3, the second tip loss measurement can be determined based on a count of the objects 306 and/or based on a count of the rows 308. As illustrated in FIG. 3, at the third time, two rows 308 remain visible in the pattern 304. At the second time, three rows 308 were visible in the pattern 304. Thus, the image of the reference marker 302 at the third time reveals that a second row 308b having two of the objects 306 abraded away during the second utilization. Because the second row 308b has a radial dimension of approximately 2 mil, an analysis of the third image of the airfoil 300 reveals that 2 mil of the tip 204 abraded away during the second utilization. In other words, the second tip loss measurement associated with airfoil 300 during the second utilization is 2 mil. Moreover, four of the rows 308 were visible in the pattern 304 at the first time. Thus, the image of the reference marker 302 at the third time reveals that the first and second rows 308a, 308b abraded away since the first time. Accordingly, an analysis of the third image of the airfoil 300 reveals that 4 mil of the tip 204 abraded since the first time. In particular, based on baseline data 190 of the reference marker 302 as fabricated on the airfoil 300, a total amount of tip loss can be determined based on a particular image of the reference marker 302 at a given time.

Additionally or alternatively, based on a visual analysis of the third surface 232 as depicted in FIG. 3, the second tip loss measurement can be determined based on a determination that one or more of the objects 306 and/or the rows 308 is no longer visible on the exterior surface 214 of the airfoil 300. As illustrated in FIG. 3, two of the rows 308 remain visible on the exterior surface 214 at the third time while the second row 308b of the objects 306 is no longer visible on the exterior surface 214 of the airfoil 300 at the third time. In other words, the image of the reference marker 302 at the third time reveals that the second row 308b of the objects 306 abraded away during the second utilization. Because the second row 308b has a radial dimension of approximately 2 mil, an analysis of the second image of the airfoil 300 reveals that 2 mil of the tip 204 abraded away during the second utilization. Moreover, because the first and second rows 308a, 308b are no longer visible in image of the reference marker 302 at the third time, the image reveals that the first and second rows 308a, 308b abraded away since the first time. Accordingly, an analysis of the third image of the airfoil 300 reveals that 4 mil of the tip 204 abraded since the first time.

While the object 306 of FIG. 3 are arranged in a triangle pattern, it is understood that the objects 306 can be arranged in other suitable patterns in other examples such that pattern 304 can be tracked over time (e.g., a star, a rectangle, pentagon, another shape, etc.). In some examples, different rows 308 or other reference planes can have objects 306 of different dimensions (e.g., lengths, heights, diameters, etc.). While the objects 306 of FIG. 3 are circles, the objects 306 can include other shapes in other examples (e.g., dots, boxes or rectangles, triangles, other geometric shapes, non-geometric shapes, characters (e.g., alphanumeric characters), other symbols, etc.). In some examples, one or more of the objects 306 can differ from one another. For example, the different rows 308 can include different objects 306 such that each row 308 can be differentiated based on the objects 306 of the row 308.

In some examples, one or more of the objects 306 can include detectable features or markers such that the object(s) 306 are detectable via an object detection model and/or algorithm (e.g., using the inspection circuitry 186 of FIGS. 1 and 8). For example, the object(s) 306 can include barcodes, a Quick-Response (QR) codes, Augmented Reality (AR) markers, ARTag markers, ArUco markers (Augmented Reality University of Cordoba), AprilTag markers, CCC (Concentric contrasting circle) markers, CCTag (concentric circle) markers, RUNE-Tag markers (Rings of Unconnected Ellipses), STag (Stable Fiducial Marker System) markers, STag2 markers, and/or other objects and/or patterns suitable for optical recognition.

In some examples, one or more of the objects 306 can include identifying features. For example, one or more of the objects 306 can be encoded with a respective identifier (e.g., an ID) using the identifying features to enable identification of the object 306. For example, each row 308 can include a respective encoded object(s) 306. In some such examples, a computing device (e.g., the computing device 184) can execute a model or algorithm that can decode the objects 306 to identify particular one of the objects 306 that are visible on the exterior surface 214 of the airfoil 300 at a particular time. Further, based on the baseline data 190, the computing device 184 can determine particular ones of the objects 306 that are no longer visible on the exterior surface 214 of the airfoil 300.

As illustrated in FIG. 3, the reference marker 302 is displayed on a portion of the airfoil 300 at which the tip loss occurs. In other words, the pattern 304 is localized to the tip 204 of the airfoil 300. The reference marker 302 of FIG. 3 can be positioned at any location adjacent the tip 204 of the airfoil 300. For example, the reference marker 302 can be positioned at other locations on the first side 212 that are adjacent the tip 204 (e.g., closer to or adjacent an upstream edge 208 of the airfoil 300 and/or closer to or adjacent a downstream edge 210 of the airfoil 300) and/or on the second side of the airfoil 200 adjacent the tip 204. In particular, over time, as the turbofan engine 100 is operated (e.g., used in flight), the tip 204 of the airfoil 300 can be worn. Such wear can be identified based on the number of lines, stripes, or other markers that are made visible by the wear at the tip 204 of the airfoil 300.

In some examples, the reference marker 302 can be positioned at multiple locations on the exterior surface 214 of the airfoil 200. For example, a first copy or version of the reference marker 302 can be positioned adjacent to the upstream edge 208 and a second copy or version of the reference marker 302. Thus, comparison of the reference markers 302 can be used to determine whether the upstream edge 208 and the downstream edge 210 experience different amounts of tip loss. In some examples, the reference marker 302 can be extended upstream or downstream such that the reference marker 302 occupies a larger area of the tip 204.

Further, the reference marker 302 of FIG. 3 can be positioned on another type of component in other examples, such as (but not limited to) a another blade, a non-turning vane, a stator, a platform, a nozzle, a rotor, a casing, a shroud, a disc, a shaft, etc. and/or a component of another type of gas turbine engine.

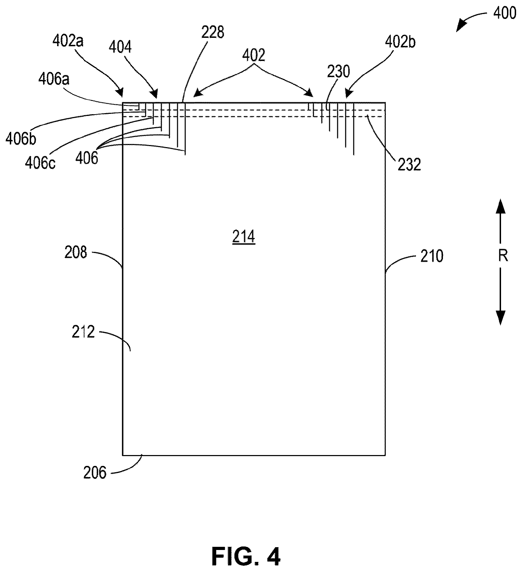

FIG. 4 is a schematic illustration of an example airfoil 400 of a gas turbine engine (e.g., the turbofan engine 100 of FIG. 1) having an example reference markings disposed thereon in accordance with teachings disclosed herein. The airfoil 400 of FIG. 4 is an airfoil of a rotor blade (e.g., rotor blade 164, 168, 172, 176 of FIG. 1) but can be another type of component in other examples such as (but not limited to) another blade, a non-turning vane, a stator, a platform, a nozzle, a rotor, a casing, a shroud, a disc, a shaft, etc. and/or a component of another type of gas turbine engine. The airfoil 400 of FIG. 4 is substantially similar or identical to the airfoils 200, 300 of FIGS. 2-3. However, the airfoil 400 of FIG. 4 includes other example reference markers 402 disclosed herein. The reference markers 402 of FIG. 4 are structured to facilitate measure of tip loss of the airfoil 400, but can be used to measure other types of distortions in additional or alternative examples, such as (but not limited to) measurements indicative of a gap, measurements of another type of edge (e.g., the upstream edge 208, the downstream edge 210, etc.). In some examples, the reference markers 402 implement means for indicating. The reference markers 402 can be fabricated via one or more marking techniques such as, but not limited to, laser marking, chemical etching, stamping, ink printing, coating and masking, peening, etc.

As illustrated in FIG. 4, the reference markers 402 of FIG. 4 are disposed on an exterior surface 214 of the airfoil 400 adjacent a tip 204 of the airfoil 400. In particular, the airfoil 400 of FIG. 4 includes a first reference marker 402a of the reference markers 402, which is located adjacent to an upstream edge 208 of the airfoil 400, and a second reference marker 402b of the reference markers 402, which is located adjacent to a downstream edge 210 of the airfoil 400. Thus, the first reference marker 402a can be used to determine a tip loss measurement relative to the upstream edge 208 of the airfoil 400 and the second reference marker 402b can be used to determine a tip loss measurement relative to the downstream edge 210 of the airfoil 400. In some examples, the tip loss measurement can be indicative of an amount of tip rubbing that occurred during the utilization of the airfoil 400 and indicative of a tip clearance (e.g., a gap) between the tip 204 and the surrounding structure during operation of the turbofan engine 100.

Each of the reference markers 402 of FIG. 4 includes an example pattern 404 (e.g., indicator, design, arrangement, configuration, geometry, etc.) configured to enable the tip loss measurements. In particular, the pattern 404 of FIG. 4 includes spatial marking features that provide a reference system for determining an amount of the tip 204 that abraded during operation of the turbofan engine 100. For example, the pattern 404 of FIG. 4 includes an array of lines 406 of different radial lengths or heights.

The pattern 404 of FIG. 4 enables measurements of the tip loss to be determined based on images of the reference markers 402 on the airfoil 400 as captured by a camera (e.g., the camera 180 of FIG. 1). In particular, the pattern 404 is displayed on the airfoil 400 such that the pattern 404 is visible in images captured of the reference markers 402 on the airfoil 400.

To enable the measurements of tip loss, the lines 406 are fabricated on the airfoil 400 such that an amount of the lines 406 and heights of the lines 406 are known. In other words, dimensions of the spatial marking features of the reference markers 402 of FIG. 4 are known to facilitate measurement of the airfoil 400. For example, in FIG. 4, the amount of the lines 406 and a height of each line 406 may be known based on fabrication of the lines 406 on the exterior surface 214 of the airfoil 400. In this example, a first line 406a of the lines 406 has a height (e.g., a radial length or dimension) of approximately 2 mil. However, the height of the first line 406a can be larger (e.g., greater than 2 mil) or smaller (e.g., less than 2 mil) in other examples. In this example, the lines 406 are set at approximately 2 mil increments arranged sequentially. Thus, each line 406 is approximately 2 mil taller or shorter than an adjacent line 406. For example, a second line 406b of the lines 406 adjacent the first line 406a can have a height (e.g., a radial length or dimension) of approximately 4 mils and a third line 406c of the lines 406 adjacent the second line 406b can have a height (e.g., a radial length or dimension) of approximately 4 mils. It is understood, however, that the lines 406 can have other heights and/or arrangements in other examples, including non-incremented heights. Further, the pattern 404 of FIG. 4 includes seven of the lines 406, but can include a different amount (e.g., more or less) of the lines 406 in other examples.

The lines 406 of the pattern 404 provide an on-component measurement scale that can be repeatedly used to determine the tip loss measurement at different times to determine tip loss caused during operation of the turbofan engine 100. That is, the tip loss measurements of the airfoil 300 can be determined based on a visual analysis of the reference marker 402 as depicted in an image and/or based on analysis of image data corresponding to the image (e.g., via computer vision techniques). In other words, the pattern 404 enables measurements of the tip loss to be determined using the images captured at different times to monitor tip loss experienced by the airfoil 200 over time (e.g., based on how much of the pattern 404 is visible in each image, etc.). In some examples, the reference markers 402 implement a length/distance gauge to determine a linear dimension relative to the tip 204 of the airfoil 400.

For example, the airfoil 400 of FIG. 4 is depicted at a first time prior to a first utilization. In some examples, the first utilization is an initial utilization (e.g., after fabrication of the airfoil 400). In some examples, the first utilization is a utilization after a previous inspection based on a use of the airfoil 400. The tip 204 of the airfoil 400 in FIG. 4 is defined by a first surface 228 of the airfoil 400 at the first time. In some examples, a first image of the airfoil 400 corresponding to the airfoil 400 at the first time can be included as baseline data 190 for the airfoil 400.

During the first utilization, tip rubbing between the tip 204 of the airfoil 400 and a surrounding structure can cause the first surface 228 of the airfoil 400 to erode, revealing a second surface 230 of the airfoil 400 (shown in dashed line). At a second time after the first utilization of the airfoil 400, the second surface 230 may be a radially outer-most surface of the airfoil 200 such that the second surface 230 defines the tip 204 of the airfoil 400 at the second time. A first tip loss dimension of the airfoil 400 can be determined based on a second image of the airfoil 400 corresponding to an image of the reference marker 402 on the airfoil 400 at the second time. Specifically, due to the depiction of the reference marker 402 on the airfoil 400 at the second time, the tip 204 can be measured against the pattern 404 to determine the first tip loss measurement.

Based on a visual analysis of the airfoil 400 as depicted in FIG. 4, the first line 406a abraded away during the first utilization. Thus, an analysis of the second image of the airfoil 400 reveals that 2 mil of the tip 204 abraded away during the first utilization. Accordingly, the first tip loss measurement associated with the first utilization is approximately 2 mil, meaning the airfoil 400 of FIG. 4 experienced 2 mil of tip loss during the first utilization.

During a second utilization of the airfoil 400, tip rubbing between the tip 204 and the surrounding structure can cause the second surface 230 of the airfoil 400 to erode, revealing a third surface 232 of the airfoil 400 (shown in dashed line). At a third time after the second utilization of the airfoil 400, the third surface 232 can define the tip 204 of the airfoil 400. A second tip loss dimension of the airfoil 400 can be determined based on a third image of the airfoil 400 corresponding to an image of the reference marker 402 on the airfoil 400 at the third time. Specifically, due to the depiction of the reference marker 402 on the airfoil 400 at the third time, the tip 204 can be measured against the pattern 404 to determine the second tip loss measurement.

Based on a visual analysis of the airfoil 400 as depicted in FIG. 4, the first line 406a abraded away during the first utilization. Thus, an analysis of the second image of the airfoil 400 reveals that 2 mil of the tip 204 abraded away during the first utilization. Accordingly, the first tip loss measurement associated with the first utilization is approximately 2 mil, meaning the airfoil 400 of FIG. 4 experienced 2 mil of tip loss during the first utilization. In other words, as the turbofan engine 100 is operated over time, the tip 204 of the airfoil 300 is worn. The 1 mil of wear caused during the first utilization is revealed by the reference marker 216 as made visible on the airfoil 400.

Based on a visual analysis of the airfoil 400 as depicted in FIG. 4, a second line 406b of the lines 406 abraded away during the second utilization. Thus, an analysis of the third image of the airfoil 400 reveals that 2 mil of the tip 204 abraded away during the second utilization. Accordingly, the second tip loss measurement associated with the second utilization is approximately 2 mil, meaning the airfoil 400 of FIG. 4 experienced 2 mil of tip loss during the second utilization. The 2 mil of wear caused during the second utilization is revealed based on analysis of the reference markers 402 as displayed on the airfoil 300. Moreover, an analysis of the third image of the airfoil 400 reveals that 4 mil of the tip 204 abraded since the first time. That is, the 4 mil of wear caused since the first time is revealed based on the display of the reference marker 216 on the airfoil 400. In particular, based on baseline data 190 of the reference marker 402 as fabricated on the airfoil 400, a total amount of tip loss can be determined based on a particular image of the reference marker 402 at a given time.

Like the reference marker 302 of FIG. 3, the reference marker 402 of FIG. 4 is displayed at a portion of the airfoil 400 at which the tip loss occurs. In other words, the pattern 404 is localized to the tip 204 of the airfoil 400, but can be positioned at any location adjacent the tip 204 of the airfoil 400 (e.g., at other locations on the first side 212 that are adjacent the tip 204 and/or on the second side of the airfoil 400 adjacent the tip 204. Further, the reference marker 402 of FIG. 4 can be positioned on another component in other examples.

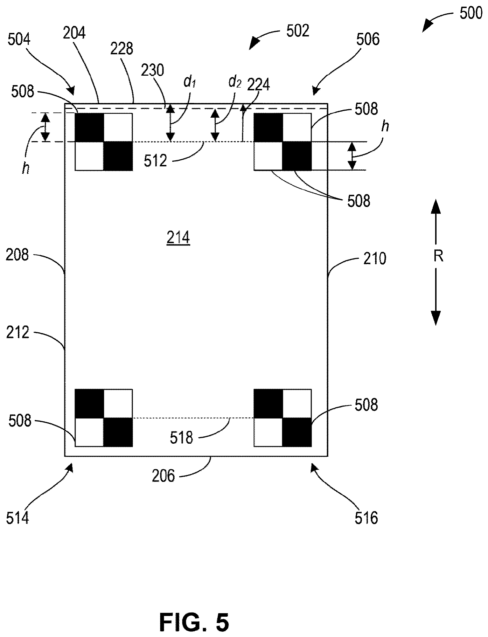

FIG. 5 is a schematic illustration of an example airfoil 500 of a gas turbine engine (e.g., the turbofan engine 100 of FIG. 1) having an example reference markings disposed thereon in accordance with teachings disclosed herein. The airfoil 500 of FIG. 5 is an airfoil of a rotor blade (e.g., rotor blade 164, 168, 172, 176 of FIG. 1) but can be another type of component in other examples such as (but not limited to) another blade, a non-turning vane, a stator, a platform, a nozzle, a rotor, a casing, a shroud, a disc, a shaft, etc., and/or a component of another type of gas turbine engine. The airfoil 500 of FIG. 5 is substantially similar or identical to the airfoils 200, 300, 400 of FIGS. 2-5. However, the airfoil 500 of FIG. 5 includes other example reference markers 502 disclosed herein. The reference marker 502 of FIG. 5 is structured to facilitate measures of tip loss and deformation of the airfoil 500, but can be used to measure other types of distortions in additional or alternative examples, such as (but not limited to) measurements indicative of a gap, measurements of another type of edge (e.g., the upstream edge 208, the downstream edge 210, etc.) etc. The reference marker 302 can be fabricated via one or more marking techniques such as, but not limited to, laser marking, chemical etching, stamping, ink printing, coating and masking, pending, etc. In some examples, the reference marker 502 implements means for indicating.

As illustrated in FIG. 5, the reference marker 502 includes an example first pattern 504 and an example second pattern 506. The first pattern 504 and the second pattern 506 are substantially the same in FIG. 5, but can differ from one another in other examples. The first and second patterns 504, 506 are disposed on an exterior surface 214 of a first side 212 of the airfoil 500. In this example, the first and second patterns 504, 506 are positioned adjacent a tip 204 of the airfoil 500, but can be positioned on other locations of the exterior surface 214 that enable a measure of tip loss. The first pattern 504 of FIG. 5 is positioned adjacent an upstream edge 208 of the airfoil 500 and the second pattern 506 of FIG. 5 is positioned adjacent a downstream edge 210 of the airfoil 500.

The first and second pattern 504, 506 include spatial marking features that facilitate definition of a reference datum to orientate the reference marker 502 relative to the airfoil 500. For example, the patterns 504, 506 of FIG. 5 are implemented by boxes formed of visually distinct rectangles 508 positioned adjacent to one another. That is, the patterns 504, 506 of FIG. 5 are implemented by checkered boxes having alternating rectangles 508 of different colors. However, examples disclosed herein are not limited thereto. For example, the rectangles 508 can include different shades, patterns, textures, and/or other visually distinguishable features.

The reference marker 502 can be used to define an example first reference datum 512 (illustrated in dashed line) to measure an aspect of the airfoil 500. In the example of FIG. 5 the rectangles 508 can be used to define the reference datum 512, which implements a reference plane for the tip loss measurement. For example, the reference datum 512 can be defined relative to the first pattern 504 and the second pattern 506 based on interfaces of the rectangles 508. As illustrated in FIG. 5, the reference datum 512 can be added to the image (e.g., via the inspection circuitry 186 of FIG. 1).

The first and second pattern 504, 506 can also include features that provide an on-component measurement scale that can be used to measurement an aspect of the airfoil 500 relative to the reference datum 512. In the example of FIG. 5, dimensions of the rectangles 508 are known. For example, the dimension of the rectangles 508 can be baseline data 190 associated with the reference marker 502. Thus, the patterns 504, 506 can be used to define a reference plane and to provide a scale to measure an aspect of the airfoil 500. In other words, the rectangles 508 can implement a measuring unit for measuring the airfoil 500. In other words, dimensions of the spatial marking features of the reference marker 502 of FIG. 5 are known to facilitate measurement of the airfoil 500.

For example, as illustrated in FIG. 5, a distance 224 defined between the tip 204 and the reference datum 512 defines a tip dimension of the airfoil 500, which can be used to help determine tip loss of the airfoil 500. As previously discussed, the tip dimension *dt* of the airfoil 500 at a particular time is based on a radially outer-most surface defining the tip 204 of the airfoil 200 at that time. For example, as illustrated in FIG. 5, a first surface 228 of the airfoil 500 can define the tip 204 of the airfoil 200 at a first time.

The patterns 504, 506 enable measurements of a tip dimension *dt* (e.g., the tip dimension dt of FIG. 2) to be determined based on image data (e.g., an image(s)) of the reference marker 502 on the airfoil 500 as captured by a camera (e.g., the camera 180 of FIG. 1). In particular, the patterns 504, 506 are displayed on the airfoil 500 such that the patterns 504, 506 are visible in captured images of the reference marker 502 on the airfoil 200. As such, the patterns 504, 506 of the reference marker 502 provide a scale that can be repeatedly used to determine the distance 224 to measure the tip dimension *dt* at different times to determine tip loss. Specifically, example heights (denoted *h*) of the rectangles 508 are known and serve as a measurement scale against which the tip dimension can be determined.

As illustrated in FIG. 5, a first surface 228 of the airfoil 500 defines the tip 204 of the airfoil 500 at a first time. A measure of the distance 224 between the reference datum 512 and the first surface 228 of the airfoil 500 defines a first tip dimension (denoted *d*1) of the airfoil 200. Specifically, the first tip dimension *d*1 of the airfoil 500 is defined between the reference datum 512 and the tip 204 of the airfoil 200 at the first time. The first tip dimension can be determined based on the height *h* of the rectangles 508, the reference datum 512, and the first surface 228. For example, the inspection circuitry 186 can be used to define the reference datum 512 relative to the patterns 504, 506, detect the tip 204, and/or to measure the first tip dimension based on the patterns 504, 506.

During the first utilization, tip rubbing between the tip 204 and a structure surrounding the tip 204 (e.g., a casing, a shroud, etc.) can cause the first surface 228 of the airfoil 500 to erode, revealing an example second surface 230 of the airfoil 200 (shown in dashed line). At a second time after the first utilization of the airfoil 500, the second surface 230 can define the tip 204 of the airfoil 500. A measure of the distance 224 between the reference datum 512 and the second surface 230 of the airfoil 500 defines a second tip dimension d2 of the airfoil 500. Specifically, the second tip dimension d2 of the airfoil 500 is defined between the reference datum 512 and the tip 204 of the airfoil 200 at the first time. The second tip dimension can be determined based on the height *h* of the rectangles 508, the reference datum 512, and the second surface 230. For example, the inspection circuitry 186 can be used to define the reference datum 512 relative to the patterns 504, 506, detect the tip 204, and/or to measure the second tip dimension based on the patterns 504, 506. Further, the first tip dimension and the second tip dimension can be compared to one another and/or other values to determine tip loss measurements. In some examples, the tip loss measurements can be indicative of an amount of tip rubbing that occurred during the utilization of the airfoil 500 and indicative of a tip clearance (e.g., a gap) between the tip 204 and the surrounding structure during operation of the turbofan engine 100.

As illustrated in FIG. 5, the first reference marker 502 can additionally include a third pattern 514 and a fourth pattern 516 on the exterior surface 214 of the airfoil 500. The third and fourth patterns 514, 516 are substantially similar to the first and second patterns 504, 506, but can be different in other examples. In the examples of FIG. 5, the third and fourth patterns 514, 516 can be positioned adjacent a root 206 of the airfoil 500. In particular, the third pattern 514 is positioned adjacent to the upstream edge 208 of the airfoil 500 and the fourth pattern 516 is positioned adjacent the downstream edge 210 of the airfoil 500. In some examples, the first reference marker 502 can include additional patterns at additional locations.

The patterns 504, 506, 514, 516 of the reference marker 502 can be used to define other first reference datums to measure other aspects of the airfoil 500. For example, the patterns 504, 506, 514, 516 of FIG. 5 facilitate measurement of other types of distortion, such as creep, shrinkage, etc. As illustrated in FIG. 5, the rectangles 508 of the third and fourth patterns 514, 516 can be used to define an example second reference datum 518 (shown in dashed lie). The second reference datum 518 implements another reference plane to measure the airfoil 500, and can also be added to the image (e.g., via the inspection circuitry 186 of FIG. 1).

The patterns 504, 506, 514, 516 provide an on-component measurement scale that can be used to measurement an aspect of the airfoil 500 relative to the first reference datum 512 and the second reference datum 518. For example, a radial distance between the first reference datum 512 and the second reference datum 518 can be monitored over time to detect creepage or shrinkage of the airfoil 500. For example, the radial distance between the first and second reference datums 512, 518 can be determined at the first and second times, and corresponding measurements can be stored as baseline data 190. The measurements can be compared to one another to identify a distortion of the airfoil 500 between the first and second times. In some examples, additional patterns can be included at other locations to identify localized distortions.

In some examples, one or more of the patterns 504, 506, 514, 516 include identifiable features and/or detectable features that can be used to identify the airfoil 500.

In some examples, one or more of the patterns 504, 506, 514, 516 can include features that can be detected, identified, and/or localized in an image by a computing device (e.g., the computing device 184 of FIG. 1) executing an object detection model and/or algorithm. In some examples, one or more of the patterns 504, 506, 514, 516 include a detectable feature(s) (e.g., a landmark feature, key point feature(s), an anchor(s), etc.) that can be detected by a computing device (e.g., the computing device 184 of FIG. 1), such as, but not limited to, one or more of a point, a bar, an ellipse, a triangle, an edges (e.g., of the marker), an object, a corner, a lines, a circle, a frame, etc.

For example, the patterns 504, 506, 514, 516 can include a target design that the computing device 184 (e.g., using the inspection circuitry 186 of FIGS. 1 and 8) is trained to detect. For example, one or more of the patterns 504, 506, 514, 516 can include a QR code, a checkerboard pattern, an AR marker, an ARTag marker, an ArUco marker, an AprilTag marker, a RUNE-Tag, a STag marker, a STag2 marker, a CCC marker, a CCTag marker, and/or another pattern having identifiable geometric features forming the target design. In such examples, the computing device 184 detect the reference marker 502 without human intervention. In some examples, the patterns 504, 506, 514, 516 include features that enable the computing device 184 to define the reference datum 512 and measure the tip 204 of the airfoil 500 relative to the reference datum 512. For example, the computing device 184 can be configured to identify the rectangles 508 of FIG. 5 and define the reference datum 512 against which the airfoil 500 can be oriented.

In some examples, one or more of the patterns 504, 506, 514, 516 can include features that can be decoded for identification of the airfoil 500. For example, the pattern 504, 506, 514, 516 can be encoded via identifiable features that can be decoded by a computing device (e.g., the computing device 184 of FIG. 1) to extract an identifier (ID) associated with the airfoil 500. In some such examples, one or more of the patterns 504, 506, 514, 516 include a linear or one dimensional code, a two-dimensional barcode, a matrix code (e.g., a QR code), a color- or pattern-based code, a line-based code, a box-based, a ring-based code (e.g., a CCC marker), a dot-based code, and/or another type of identifiable code encoded with an ID associated with the airfoil 500. For example, one or more of the patterns 504, 506 can be an encoded marker having specific features that are assigned to a particular identification associated with the airfoil 500. In some examples, the specific features and the identification can be included in a look-up table, a reference library or index, and/or another data structure that associated IDs with corresponding components. For example, a look-up table having reference markers and corresponding identifiers can be stored (e.g., in the database 904) and utilized during an inspection. Further, the computing device 184 can be configured to decode the pattern 504, 506, 514, 516 to identify the airfoil 500.

In some examples, rather than providing provide a relative measurement scale, one or more of the patterns 504, 506, 514, 516 includes features for an explicit measurement scale for measurement of an aspect of the airfoil 500. In other words, the reference marker 502 of FIG. 2 can include features that allow a measurement to be taken explicitly rather than by relative scaling. For example, the reference marker 502 can include a pattern that enables detection of position and/or orientation of the reference marker 502. In some such examples, the reference marker 502 can include one or more of a checkerboard pattern, an ArUco marker, a STag marker, an STag2 marker, and/or another explicit reference marker.

In some such examples, the reference marker 502 can be used by the computing device 184 executing the inspection circuitry 186 to determine a position and/or orientation of the reference marker 502 in three-dimensional space to determine a position and orientation of the airfoil 500 in three-dimensional space. For example, as discussed in greater detail in relation to FIG. 9, the inspection circuitry 186 can execute a measurement model (e.g., the measurement model 912 of FIG. 9) trained to determine the position and/or orientation of the reference marker 502 based on two-dimensional features of the reference marker 502 as depicted in an image. In such examples, the reference marker 502 provides absolute data at least in part because a location of the reference marker 502 as manufactured on the airfoil 500 is known. In some such examples, the features of the reference marker 502 are used to determine a three-dimensional rotation and/or translation of the airfoil 500.

In some examples, the reference marker 502 enables for measurements for inspection of the airfoil 500 to be expedited relative to traditional methods and/or relative to scaled measurements. For example, explicit patterns can provide for better orientation, particularly when an angle of the camera 180 is not aligned with the reference marker 502 when an image is captured. In other words, the reference marker 502 of FIG. 2 can include features that allow for use of AI to reduce measurement error due to variation in placement of the camera 180 relative to the reference marker 502.

In some examples, the measurement model 912 is an AI-based model trained to determine a position and/or orientation of the airfoil 500 depicted in an image. In particular, the AI-based measurement model can be trained using a relatively large set of training images of the reference marker 502 such that the measurement model 912 learns to map from the set of two-dimensional image features to pose transformation. The training images can be labeled (e.g., super-vised learning) and/or unlabeled (e.g., unsupervised learning).

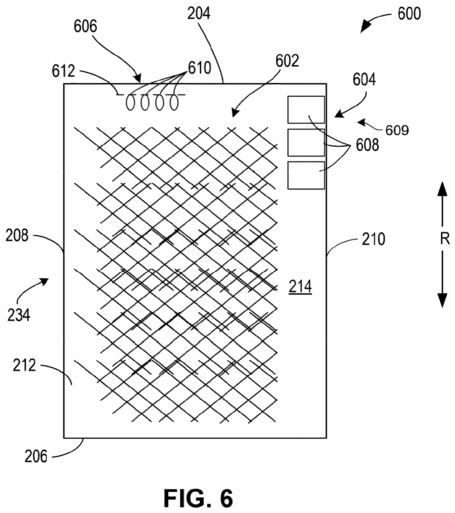

FIG. 6 is a schematic illustration of an example airfoil 600 of a gas turbine engine (e.g., the turbofan engine 100 of FIG. 1) having an example reference markings disposed thereon. The airfoil 300 of FIG. 3 is an airfoil of a rotor blade (e.g., rotor blade 164, 168, 172, 176 of FIG. 1) but can be another type of component in other examples such as (but not limited to) another blade, a non-turning vane, a stator, a platform, a nozzle, a rotor, a casing, a shroud, a disc, a shaft, etc. and/or a component of another type of gas turbine engine. The airfoil 600 of FIG. 6 is substantially similar or identical to the airfoils 200, 300, 400, 500 of FIGS. 2-5. However, the airfoil 600 of FIG. 6 includes other example reference markers 602, 604, 606 disclosed herein. In particular, the airfoil 600 of FIG. 6 includes a first reference marker 602, a second reference marker 604, and a third reference marker 606. However, the airfoil 600 can include additional and/or alternative reference markers in other examples reference markers 602, 604, 606 can be fabricated via one or more marking techniques such as, but not limited to, laser marking, chemical etching, stamping, ink printing, coating and masking, pending, etc.. In some examples, the reference marker 602, the second reference marker 604, and/or the third reference marker 606 implements means for indicating.

The first reference marker 602 of FIG. 6 is structured to facilitate detection of deformation of the airfoil 600, but can be used to measure other types of distortions in additional or alternative examples, such as (but not limited to) measurements indicative of a gap, measurements of another type of edge (e.g., the upstream edge 208, the downstream edge 210, etc.), etc. The first reference marker 602 of FIG. 6 is substantially similar to the reference marker 218 of FIG. 2. For example, the first reference marker 602 of FIG. 6 includes the second pattern 234 of FIG. 2. However, the second pattern 234 of FIG. 6 is displayed on a substantially large portion of the exterior surface 214 (e.g., 60 percent or more). For example, the second pattern 234 of FIG. 6 is applied to the exterior surface 214 of the airfoil 600 in a manner that enables determinations of measurements of overall deformations (e.g., large-scale or macro deformations) of the airfoil 600 can as well as localized deformations (e.g., micro deformations, etc.) of the airfoil 600. By marking the large portion of the airfoil 600, images of the reference marker 602 can be captured at different time to map specific features or deformations of the airfoil 600 over time.

The second reference marker 604 is structured to provide a reference frame for measurement of the airfoil 600. In particular, the second reference marker 604 includes spatial marking features that provide a reference frame to orientate the reference marker 604 relative to the airfoil 600. For example, the second reference marker 604 of FIG. 6 includes radially adjacent rectangles 608 positioned adjacent an edge (e.g., a downstream edge 208, a downstream edge 210, a tip 204, etc.). The rectangles 608 can be used as detectable features against which the airfoil 600 can be oriented. For example, the rectangles 608 can be used in conjunction with a detection algorithm executed by a computing device (e.g., the computing device 184 of FIG. 1) based on feature detection, such as (but not limited to) edge detection, line extraction, corner detection, quad detection, border detection, block detection, etc. For example, inspection circuitry (e.g., the inspection circuitry 186 of FIGS. 1 and 9) can execute the detection algorithm to detect the rectangles 608 of the reference marker 604 of FIG. 6. In some examples, the rectangles 608 are arranged in a pattern 609 that the inspection circuitry 186 is trained to detect.

In some examples, one or more of the rectangles 608 can include features that can be detected, identified, and/or localized in an image by executing an object detection model and/or algorithm. For example one or more of the rectangles 608 can include a QR code, a checkerboard pattern, an AR marker, an ARTag marker, an ArUco marker, an AprilTag marker, a RUNE-Tag, a STag marker, a STag2 marker, a CCC marker, a CCTag marker, and/or another pattern having identifiable geometric features forming the target design. In such examples, the computing device 184 detects the reference marker 604 without human intervention.

In some examples, the rectangles 608 include features that provide an on-component measurement scale that can be used to measurement an aspect of the airfoil 600. In the example of FIG. 6, dimensions of the rectangles 608 are known. For example, the dimensions of the rectangles 608 can be baseline data 190 associated with the reference marker 604. Thus, the rectangles 608 can be used to a scale to measure an aspect of the airfoil 600. In other words, the rectangles 608 can implement a measuring unit for measuring the airfoil 600. In other words, dimensions of the spatial marking features of the reference marker 604 of FIG. 6 are known to facilitate measurement of the airfoil 600.

The third reference marker 606 of FIG. 6 is structured to facilitate measure of tip loss of the airfoil 600, but can be used to measure other types of distortions in additional or alternative examples, such as (but not limited to) measurements indicative of a gap, measurements of another type of edge (e.g., the upstream edge 208, the downstream edge 210, etc.). In particular, the third reference marker 606 is positioned adjacent a tip 204 of the airfoil 200 to facilitate detection of tip loss of the airfoil 600. Like the reference marker 302 of FIG. 3, the third reference marker 606 of FIG. 6 includes an array of objects 610 configured to enable the tip loss measurement. In particular, the objects 610 of FIG. 6 include spatial marking features that provide a reference system for determining an amount of the tip 204 that is abraded during operation of the turbofan engine 100.

To help enable measurement of the tip loss, the objects 610 are fabricated on the airfoil 600 such that one or more dimensions of the objects 610 are known. For example, in FIG. 6, a radial dimension of each object 610 may be known based on fabrication of the objects 610 on the exterior surface 214 of the airfoil 600. Thus, the objects 610 are arranged in a pattern and, in particular, a row of objects. The objects 610 of the third reference marker 606 provide an on-component scale against which the tip loss measurement can be determined. More specifically, the third reference marker 606 provides a measurement scale that can be repeatedly used to determine the tip loss measurement at different times to determine tip loss caused during operation of the turbofan engine 100.

The third reference marker 606 of FIG. 6 enables measurements of the tip loss to be determined based on images of the reference marker 606 on the airfoil 600 as captured by a camera (e.g., the camera 180 of FIG. 1). In particular, the third reference marker 606 is displayed on the airfoil 600 such that the objects 610 are visible in images captured of the reference marker 606 on the airfoil 600. For example, the objects 610 can be used to define a reference datum 612 (shown in dashed line) that can be compared to the tip 204 of the airfoil 600. In particular, a location of the tip 204 relative to the reference datum 612 can be identified and used to determine a distance of the tip 204 relative to the reference datum 612. Further, the objects 610 can be used to compare the distance to the radial dimensions of the object 610 to determine a tip dimension indicative of tip loss.

In some examples, the third reference marker 606 can be used in conjunction with the second reference marker 604 to measure the tip loss. For example, the second reference marker 604 can be used to orient the reference markers 604, 606 relative to the airfoil 600, and based on the orientation, the third reference marker 606 can be used to determine the tip loss measurement.

Generally, performance and reliability of the turbofan engine 100 depends on an ability to manage clearances between rotating and static hardware of the turbofan engine 100. As previously discussed, for example, tip loss of a rotor blade is an indicator of tip clearance (e.g., a radial gap) between the rotor blade and a surrounding structure. A large tip loss measurement can indicate that tip clearance is too narrow during operation of the turbofan engine 100 while a small tip loss measurement can indicate that tip clearance is too large during operation of the turbofan engine 100. However, clearances of other gas turbine engine components (e.g., seals, buffer cavities) can be beneficial to monitor or inspect over time.

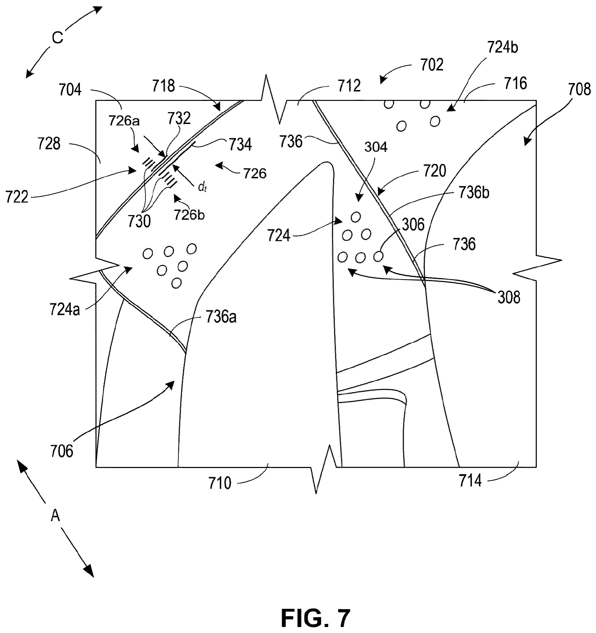

FIG. 7 is a perspective view of a section of a gas turbine engine (e.g., the turbofan engine 100 of FIG. 1) illustrating example components having reference markings in accordance with teachings disclosed herein. In this example, the components include an example rotor 702 and an example stator 704. The rotor 702 is a rotating assembly and the stator 704 is a static (e.g., non-rotating) assembly. The rotor 702 is positioned axially adjacent to the stator 704. More specifically, in this example, the rotor 702 is positioned axially downstream relative to the stator 704. In other examples, however, the rotor 702 can be positioned axially upstream relative to the stator 704.

As illustrated in FIG. 7, the rotor 702 includes at least a first blade 706 and a second blade 708, which are circumferentially adjacent to one another. In some examples, the blade 706, 708 implement a rotor blade such as the rotor blade 164, 168, 172, 176 of the turbofan engine 100 FIG. 1. However, the blade 706, 708 can be used to implement another type of component such as (but not limited to) another blade, a non-turning vane, a stator, etc. and/or a component of another type of gas turbine engine. The first blade 706 includes a first airfoil 710 coupled to a first side (e.g., a radially outward-facing side) of a first platform 712 and the second blade 708 includes a second airfoil 714 coupled to a first side (e.g., a radially outward-facing side) of a second platform 716. In some examples, the first and second airfoils 710, 714 can be implemented by any of the airfoils 200, 300, 400, 500, 600 discussed above.

During operation of the turbofan engine 100, the stator 704 and/or the rotor 702 can experience distortions that cause gaps or clearances to grow or shrink. In some examples, an axial gap defined at an interface 718 between the rotor 702 and the stator 704 can change during operation of the turbofan engine 100. In some examples, a circumferential gap defined at an interface 720 between the platforms 712, 716 can change during operation of the turbofan engine 100. In some examples, another circumferential gap defined between the airfoils 710, 714 can change during operation of the turbofan engine 100. In some examples, other gaps or clearances between the rotor 702, the stator 704, and/or other adjacent components can change during operation of the turbofan engine 100.

As illustrated in FIG. 7, the rotor 702 and the stator 704 include reference markings disclosed herein that are structured to facilitate measurements indicative of such gaps. In particular, the stator 704 includes an example first reference marker 722 and the rotor 702 includes the first reference marker 722 and an example second reference marker 724. The reference markers 722, 724 of FIG. 7 are disposed on exterior surfaces of the components 702, 704. The reference markers 722, 724 can be fabricated via one or more marking techniques such as, but not limited to, laser marking, chemical etching, stamping, ink printing, coating and masking, pending, etc.

The first reference marker 722 of FIG. 7 is configured to enable determination of a measurement indicative of an axial gap at the interface 718 between the rotor 702 and the stator 704. The second reference marker 724 of FIG. 7 is configured to enable determination of a measurement indicative of a circumferential gap at the interface 720 between the first and second platforms 712, 716. It is understood that the rotor 702 and/or the stator 704 can include additional or alternative reference markers in other examples. In some examples, the first reference marker 722 and/or the second reference marker 724 implement means for indicating.

In the example of FIG. 7, the first reference marker 722 includes a first pattern 726, which extends onto the rotor 702 and the stator 704. In particular, the pattern 726 includes a first portion 726a positioned on a platform 728 of the stator 704. Further, the pattern 726 includes a second portion 726b positioned on a platform 712 of the first blade 706. While not illustrated in FIG. 7, the second blade 708 and/or one or more other blades of the rotor 702 can additionally or alternatively include the second portion 726b of the pattern 726.

The pattern 726 includes an array of lines 730 that are substantially parallel (e.g., within +/- 5 degrees) relative to one other. The first portion 726a of the pattern 726 includes a first reference datum 732, which is implemented by an axially downstream line of the lines 730 on the stator 704 in the example of FIG. 7. The second portion 726b of the pattern 726 includes a second reference datum 734, which is implemented by an axially upstream line of the lines 730 on the rotor 702 in the example of FIG. 7. The lines 730 are fabricated on the platforms 712, 716 such that axial distances therebetween are known. As such, the lines 730 of the first pattern 726 provide an in-situ measurement scale that can be used to determine a distance between the rotor 702 and the stator 704 at the interface 718. In particular, the distance between the rotor 702 and the stator 704 at the interface 718 is based on a distance between the reference datums 732, 734. In other words, the first reference marker 722 can implement a length/distance gauge to determine a linear dimension relative to the reference datums 732, 734.

For example, to help determine a size of the gap at the interface 718 between the rotor 702 and the stator 704, a dimension (denoted "dt") can be defined by an axial distance between the first reference datum 732 and the second reference datum 734. The lines 730 provide a scale against which the dimension dt can be determined. A larger value for the dimension dt can be indicative of a larger gap while a smaller value for the dimension dt can be indicative of a smaller gap. When the dimension is smaller, the gap is smaller.

The second reference marker 724 of FIG. 7 is substantially similar to the reference marker 302 of FIG. 3. For example, the reference marker 724 includes the pattern 304 of FIG. 3, which includes optically identifiable objects 306 (e.g., shapes) arranged in rows 308. However, the reference marker 724 of FIG. 7 includes a different arrangement of the objects 306 of the rows 308. Further, while the reference marker 302 of FIG. 3 provides a frame of reference against which tip can be measured, the reference marker 724 of FIG. 7 provides a frame of reference against which a circumferential edge 736 of the platform 712 can be measured. As such, the reference marker 724 provides an in-situ measurement scale that can be used to determine a dimension of the circumferential edge 736 that can be indicative of a gap at the between the blades 706, 708. In other words, the second reference marker 724 can implement a length/distance gauge to determine a linear dimension relative to the circumferential edge 736. For example, a smaller dimension of the circumferential edge 736 can be indicative of a larger gap, while a larger dimension of the circumferential edge 736 can be indicative of a smaller gap. A respective dimension is determined at different circumferential edges 736 of the blades of the rotor 702. For example, in the example of FIG. 7, a respective second reference marker 724 is positioned at each circumferential edge 736 of the platforms 712, 716.

As illustrated in FIG. 7, in sone examples, the rotor 702 can include reference markers at other circumferential interfaces. For example, the blade 706 of FIG. 7 includes an example third reference marker 724a that is substantially similar to the second reference marker 724. In particular, the third reference marker 724a can be used to determine a dimension of another circumferential edge 736a of the first platform 712. Further, the second blade 708 can include a fourth reference marker 724b that can be used to determine a dimension of another circumferential edge 736 of the second platform 712, which is positioned at the interface 720 between the first and second platforms 712.

Like the reference markers 216, 218, 302, 402, 502, 602 discussed above, the reference markers 722, 724 of FIG. 7 enable measurements of the rotor 702 and/or the stator 704 to be determined based on images of the reference marker 722, 724 on the components 702, 704 as captured by a camera (e.g., the camera 180 of FIG. 1). In particular, the reference markers 722, 724 are displayed on the components 702, 704 such that the patterns 726 (e.g., the portions 726a, 726b of the pattern 726), 304 are visible in images captured of the reference markers 722, 724 on the components 702, 704. Further, the reference marker 722, 724 enables measurements of the components 702, 704 to be determined using the images captured at different times to monitor deformations of the components 702, 704 over time. In some examples, the measurements can be included in reference or baseline data (e.g., the baseline data 190 of FIG. 1) associated with the components 702, 704. Further, information about the reference markers 722, 724, such as (but not limited to) dimensions of the reference markers 722, 724, locations of the reference markers 722, 724, etc. can be stored as baseline data 190.

Example reference markers 216, 218, 302, 402, 502, 602, 604, 606, 722, 724 disclosed above have a variety of features. Although each reference markers 216, 218, 302, 402, 502, 602, 604, 606, 722, 724 disclosed above has certain features, it should be understood that it is not necessary for a particular feature of one example reference marker 216, 218, 302, 402, 502, 602, 604, 606, 722, 724 to be used exclusively with that example. Instead, any of the features described above and/or depicted in the drawings can be combined with any of the examples, in addition to or in substitution for any of the other features of those examples. One example's features are not mutually exclusive to another example's features. Instead, the scope of this disclosure encompasses any combination of any of the features. Features of the example reference markers 216, 218, 302, 402, 502, 602, 604, 606, 722, 724 disclosed above may be combined, divided, re-arranged, omitted, eliminated, and/or implemented in any other way.

FIG. 8 is a flowchart representative of an example method 800 for detecting distortion in a component of a gas turbine engine (e.g., the turbofan engine 100 of FIG. 1) in accordance with teachings disclosed herein. In some examples, some or all of the operations outlined in the example method 800 of FIG. 8 are performed automatically by equipment that is programmed to perform the operations. For purposes of explanation, the example process of FIG. 8 will be described primarily with reference to the reference markers 216, 218, 302, 402, 502, 602 of the airfoils 200, 300, 400, 500, 600 of FIGS. 2-6. However, the following discussion applies similarly to any other component and/or reference marker disclosed herein.

The method 800 begins at block 802, at which a reference marker 216, 218, 302, 402, 502, 602 is applied to an exterior surface (e.g., the exterior surface 214) of an engine component (e.g., the airfoils 200, 300, 400, 500, 600 of FIGS. 2-6). The reference marker 216, 218, 302, 402, 502, 602 can be applied to the exterior surface 214 of the airfoil 200, 300, 400, 500, 600 using one or more marking techniques. For example, the reference marker 216, 218, 302, 402, 502, 602 can include subtractive features fabricated into the exterior surface 214 of the airfoil 200, 300, 400, 500, 600 via a removal technique(s). For example, the subtractive features can be fabricated via laser marking, laser etching, chemical etching, peening, and/or another removal technique. In some examples, the reference marker 216, 218, 302, 402, 502, 602 includes additive features fabricated using an additive technique(s). For example, the additive features can be applied to the exterior surface 214 of the airfoil 200, 300, 400, 500, 600 via stamping, printing, painting, a coating and masking technique, and/or another additive technique.

In some examples, the reference marker 216, 218, 302, 402, 502, 602 is applied to the airfoil 200 during manufacture such that the reference marker 216, 218, 302, 402, 502, 602 is displayed on the airfoil 200 prior to installation on the turbofan engine 100. For example, application of the reference marker 216, 218, 302, 402, 502, 602 can be added to a fabrication process for the airfoil 200, 300, 400, 500, 600 such that each airfoil of the rotor includes the reference marker 216, 218, 302, 402, 502, 602. In some examples, the reference marker 216, 218, 302, 402, 502, 602 is applied to the airfoil 200 after installation of the airfoil 200, 300, 400, 500, 600 in the turbofan engine 100.

At block 804, the method 800 includes utilizing the engine component. For example, the airfoil 200, 300, 400, 500, 600 can be utilized during operation of the turbofan engine 100. During the utilization, the airfoil 200, 300, 400, 500, 600 can distort due to loads and/or environmental conditions. The utilization can include to a utilization, a threshold amount of uses, an amount of rotations, another measure of use, and/or a combination thereof. In some examples, the utilization is amount of uses before an inspection of the turbofan engine 100 is performed.

At block 806, the method 800 includes detecting a distortion of the engine component based on an image data of the reference mark on the engine component and baseline data. In particular, the method 800 includes analyzing an image of the reference marker 216, 218, 302, 402, 502, 602 on the airfoil 200, 300, 400, 500, 600 to determine a measurement indicative of the distortion. The measurement can be compared to baseline data (e.g., the baseline data 190 of FIG. 1) associated with the reference marker 216, 218, 302, 402, 502, 602 and the airfoil 200, 300, 400, 500, 600. The detection can be performed using the computing device 184, the inspection tool 182 and/or another electronic device, and can be performed manually, automatically, or a combination thereof. The measurement can be determined directly from a depiction of the reference marker 216, 218, 302, 402, 502, 602 in the image data, based on a comparison of the reference marker 216, 218, 302, 402, 502, 602 as depicted in the image to the baseline data 190, based on locations of reference points of the reference marker 216, 218, 302, 402, 502, 602, 604, 606, and/or a combination thereof, depending on a type of reference marker displayed on the airfoil 200, 300, 400, 500, 600. In some examples, the measurement is stored in a database (e.g., the database 904 of FIG. 9).

In some examples, the measurement is determined determine an inspection of the turbofan engine 100. For example, the measurement can be determined during maintenance of the turbofan engine 100 and/or a portion thereof, during a safety evaluation, during a routine inspection, etc. In some examples, the inspection of the airfoil 200 is conducted after a utilization of the airfoil 200 (e.g., after a utilization period, threshold amount of uses, threshold amount of rotations, etc.). In some examples, the inspection is based on a trigger, such as (but not limited to) a blade-out event, a threshold or defined amount hours of flight of an aircraft utilizing the turbofan engine 100, etc. In some examples, the inspection can be conducted periodically (e.g., annually, quarterly, monthly, etc.) and/or aperiodically.

In some examples, the measurement is transmitted or sent to another system for additional processing. For example, the measurement can be sent to a controller for monitoring a condition of the turbofan engine 100. When the measurement satisfies a threshold, the measurement may trigger an alter or trigger an event. For example, when the measurement satisfies the threshold, a trigger may be initiated to cause replacement, repair, or other maintenance of the turbofan engine 100 and/or the component.

FIG. 9 is a block diagram of an example implementation of the inspection circuitry 186 of FIG. 1 to measure an engine component to detect distortion thereof. The inspection circuitry 186 of FIG. 9 may be instantiated (e.g., creating an instance of, bring into being for any length of time, materialize, implement, etc.) by programmable circuitry such as a Central Processor Unit (CPU) executing first instructions. Additionally or alternatively, the inspection circuitry 186 of FIG. 9 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 9 may, thus, be instantiated at the same or different times. Some or all of the circuitry of FIG. 9 may be instantiated, for example, in one or more threads executing concurrently on hardware and/or in series on hardware. Moreover, in some examples, some or all of the circuitry of FIG. 9 may be implemented by microprocessor circuitry executing instructions and/or FPGA circuitry performing operations to implement one or more virtual machines and/or containers.

The inspection circuitry 186 of FIG. 9 includes example interface circuitry 902, which is structured to facilitate communication between the inspection circuitry 186 and other electronic devices connected thereto. For example, the inspection circuitry 186 can be communicatively coupled to the camera 180 of FIG. 1 and/or more generally, the inspection tool 182 of FIG. 1. In some examples, the inspection circuitry 186 can execute detection algorithm to detect one or more reference markers disclosed herein. For example, the detection algorithm can be based on feature detection, such as (but not limited to) edge detection, line extraction, corner detection, quad detection, border detection, circle detection, block detection, ridge detection, checkboard detection, etc. For example, the inspection circuitry 186 can execute the detection algorithm to detect the objects 306 of the reference marker 302 of FIG. 3, an edge, corner, and/or line of the patterns 504, 506, 514, 516 of FIG. 5, etc. In some examples, the detection algorithm can be based on one or more of a Histogram of Oriented Gradients (HOG), region proposal network (e.g., a region-based Convolutional Neural Network (R-CNN), a faster R-CNN, a faster R-CNN, a region-based fully convolutional network (R-FCN), a Single Shot Detector (SSD), spatial pyramid pooling (SPP-net), YOLO (You Only Look Once), retina-net, and/or another computer vision algorithm for object detection and/or recognition.

In some examples, the inspection circuitry 186 can operate the camera 180 based on detection of a reference marker disclosed herein using the interface circuitry 902 (e.g., via the articulation system). The interface circuitry 902 can receive images (e.g., image data) from the inspection tool 182, enabling the inspection circuitry 186 to inspect a gas turbine engine (e.g., the turbofan engine 100 of FIG. 1). For example, the inspection circuitry 186 can obtain images and/or other information from the inspection tool 182 and store the images and/or other information in an example database 904.

The database 904 is structured to store information to facilitate inspection of the turbofan engine 100 and/or one or more components therein. For example, the database 904 can include a detection algorithm, other computer vision algorithms, target designs to facilitate object detection, etc. In some examples, the database 904 stores baseline data (e.g., the baseline data 190 of FIG. 1) and/or other reference data. For example, the baseline data can include particular patterns for reference markers 216, 218, 302, 402, 502, 602, 604, 606, 722, 724 to enable automated detection of the reference markers 216, 218, 302, 402, 502, 602, 604, 606, 722, 724. In some examples, the database 904 stores a library, lookup table, or other data structures that associates component IDs with corresponding reference markers.

In some examples, the database 904 stores a camera matrix (e.g., a transformation matrix), distortion coefficients, and/or other information for explicit measurements using a reference marker disclosed herein. For example, the camera matrix can be used to map a 2-dimensional image of a reference marker to 3-dimensional space to determine an orientation of the component. More specifically, camera matrix is based on the camera 180 and enables determination of an orientation of the component in 3-dimensional space based on the 2-dimensional image of the reference marker on the component. The camera matrix can be determined using camera calibration techniques.

Although FIG. 9 shows a single database 904, any number and/or type of data storage may be implemented. The database 904 can be implemented by any memory, storage device and/or storage disc for storing data, such as flash memory, magnetic media, optical media, etc. Furthermore, the data stored in the example database 904 can be in any data format such as binary data, comma delimited data, tab delimited data, structured query language (SQL) structures, image data, etc.

The inspection circuitry 186 of FIG. 9 includes example user interface circuitry 906, which is structured to enable a user to interact with the inspection circuitry 186. For example, the user interface circuitry 906 can include a graphical user interface (GUI), an application display, etc., presented to a user on a display screen(s) in circuit with and/or otherwise in communication with the computing device 184. In some examples, the user controls the inspection circuitry 186 by the user interface circuitry 906. In some examples, the user interface circuitry 906 enables the inspection circuitry 186 to obtain information from the user via an input device and provide information to the user via an output device.

The inspection circuitry 186 of FIG. 9 includes example measurement determiner circuitry 908, which is structured to analyze an image to extract information therefrom. Specifically, the measurement determiner circuitry 908 is structured to analyze an image of a component having a reference marker disclosed herein to determine a measurement of the component that can be indicative of a distortion. In some examples, the measurement determiner circuitry 908 implements a measurement application and/or an inspection application.

In some examples, the measurement determiner circuitry 908 can analyze an image of a reference marker 216, 218, 302, 402, 502, 602 displayed on an airfoil 200, 300, 400, 500, 600 as discussed above in relation to FIGS. 2-6. In some examples, the measurement determiner circuitry 908 can analyze an image of a reference marker 722 displayed on a rotor 702 and/or a stator 704 as discussed above in relation to FIG. 7. In some examples, the measurement determiner circuitry 908 can analyze an image of a reference marker 724 displayed on a platform 712, 716 of a blade 706, 708 as discussed above in relation to FIG. 7. In some examples, the measurement determiner circuitry 908 can analyze an image of another reference marker structured in accordance with teachings disclosed herein to measure an aspect of a component.

The measurement determiner circuitry 908 of FIG. 9 includes an example detection model 910 and an example measurement model 912. The measurement determiner circuitry 908 can execute the detection model 910 to identify, detect, localize, and/or recognize a reference marker disclosed herein. In some examples, the detection model 910 implements a detection algorithm configured to facilitate detection of a reference marker disclosed herein. For example, the detection model 910 can include a Histogram of Gradients (HOG) algorithm, a regional-based object detection algorithm, Single Shot Detector (SSD) algorithm, a convolutional neural network (CNN), a YOLO Algorithm, and/or another object detection algorithm. In some examples, the detection model 910 implements an AI-based model trained to detect a reference marker disclosed herein. For example, the detection model 910 can implement a neural network (e.g., a convolutional neural network (CNN), a R-CNN, faster R-CNN, RetinaNet, etc.

The measurement determiner circuitry 908 can execute the measurement model 912 to determine a position and/or orientation of a component depicted in an image based a reference marker displayed thereon. Further, based on the orientation of the component, the measurement determiner circuitry 908 can execute the measurement model 912 to determine a measurement of an aspect of the component that may be indicative of a distortion.

In some examples, the measurement model 912 utilizes a camera matrix (e.g., a transformation matrix) to map two-dimensional coordinates of the reference marker 502 as detected in an image to three-dimensional space. In particular, the camera 180 focuses light reflected off of the airfoil 500 (e.g., a three-dimensional object) onto an image sensor to form the two-dimensional image. When the camera 180 is not aligned with the reference marker 502, a resulting image of the reference marker 502 on the airfoil 500 can include distortions (e.g., radial distortion, tangential distortion, etc.). The transformation from three dimensions to two dimensions can be determined using a camera matrix.

The measurement model 912 can utilize the camera matrix as well as detection of particular features (e.g., edge detection, corner detection, etc.) of the reference marker 502 in the two-dimensional image. In particular, the measurement model 912 can use the camera matrix to map coordinates of the two-dimensional reference marker to coordinates to three-dimensional space. In other words, the measurement model 912 can determine a geometric transformation that maps points in the reference marker to corresponding points (e.g., pixels) in the image.

Based on the camera matrix and features of the patterns 504, 506, 514, 516 of the reference marker 502, a position and orientation of the reference marker 502 and the airfoil 500 can be determined. In some examples, up to six degrees of freedom (e.g., three degrees of position (x, y, z) and the three degrees of rotation (roll, pitch, yaw)) can be determined that described the position and/or orientation of the reference marker 502. When the position and/or orientation of the reference marker is determined, the reference marker can be used as a scale to measure a dimension of the reference marker.

In some examples, the measurement can be transmitted or sent to a controller (e.g., a full-authority digital engine control (FADEC) system, electric controller, etc.) that controls portions of the turbofan engine 100. For example, the measurement can be determined and/or transmitted during operation of the turbofan engine 100. In response, the controller may cause actuation of a system within the turbofan engine 100. For example, in response to a measurement indicative of a tip clearance beyond a threshold value, the controller can cause actuation of clearance control system that causes the tip clearance to increase or decrease.

The inspection circuitry 186 of FIG. 9 includes example trainer circuitry 914, which is structured to aid in development of an AI model. For example, the trainer circuitry 914 can be utilized to train, test, validate, and/or deploy the example detection model 910, the example measurement model 912, and/or another AI model. As used herein, AI, including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, a computer vision model is used. Using a CNN model enables implementation of computer vision techniques for feature extraction, object detection, object recognition, image classification, and/or pose estimation. In general, machine learning models/architectures that are suitable to use in the example approaches disclosed herein will be convolutional neutral network (CNN). However, other types of machine learning models could additionally or alternatively be used such as recurrent neural network, artificial neural networks, etc.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.). For example, the labeled inputs can include labeled images of a (e.g., a reference marker 216, 218, 302, 402, 502, 602, 604, 606, 722, 724 of FIG. 2, 3, 4, 5, 6, 7 and/or another reference marker as disclosed herein) as displayed on a component (e.g., an airfoil 200, 300, 400, 500, 600, a rotor 702, a stator 704, and/or another component). Alternatively, unsupervised training (e.g., used in deep learning, a subset of machine learning, etc.) involves inferring patterns from inputs to select parameters for the ML/AI model (e.g., without the benefit of expected (e.g., labeled) outputs).

In examples disclosed herein, ML/AI models are trained using Linear regression, Logistic Regression, SVM (Support Vector Machine), decisions tree, random forest, and/or neural networks. However, any other training algorithm may additionally or alternatively be used. Training is performed using hyperparameters that control how the learning is performed (e.g., a learning rate, a number of layers to be used in the machine learning model, etc.). In some examples re-training may be performed.

Training is performed using training data. In examples disclosed herein, the training data originates from publicly available data, locally generated data, or a combination thereof. Because supervised training is used, the training data is labeled. In some examples, the training data is preprocessed. In some examples, the training data is sub-divided into training, validating, and/or testing sets.

Once training is complete, the model is deployed for use as an executable construct that processes an input and provides an output based on the network of nodes and connections defined in the model. The model is stored at the measurement determiner circuitry 908 and/or the database 904 The model may then be executed by the measurement determiner circuitry 908 to process image data corresponding to an image(s) of a reference marker 216, 218, 302, 402, 502, 602, 604, 606, 722, 724 displayed on a component(s) 200, 300, 400, 500, 600, 702, 704.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

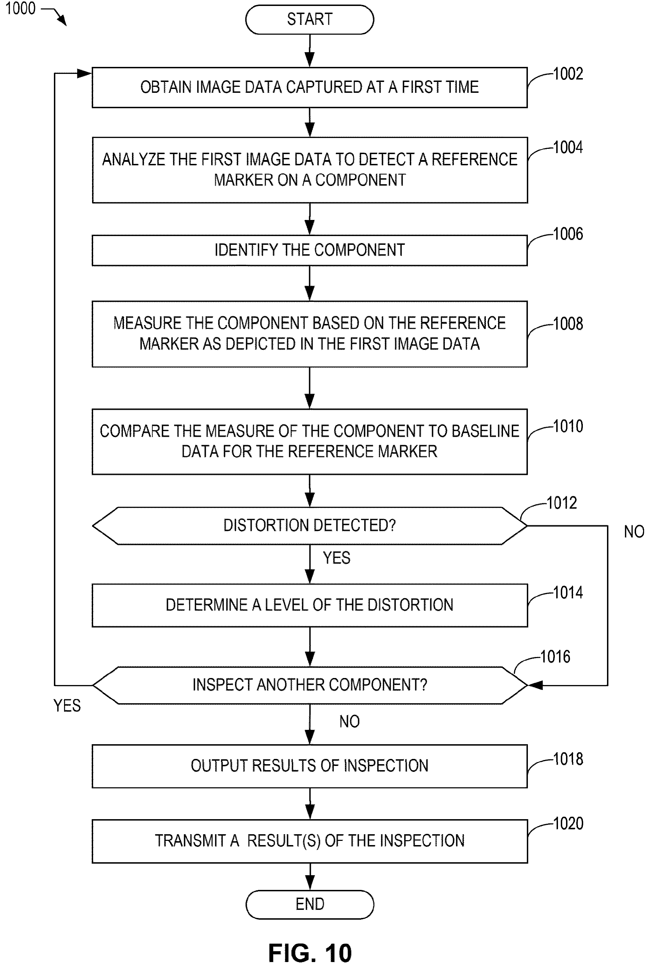

In some examples, the inspection circuitry 186 includes means for inspecting. In some examples, the inspection circuitry 186 may be instantiated by programmable circuitry. For instance, the inspection circuitry 186 may be instantiated by a microprocessor executing machine executable instructions such as those implemented by at least blocks 1002-1020 of FIG. 10. In some examples, the inspection circuitry 186 may be instantiated by hardware logic circuitry, which may be implemented by an ASIC, XPU, or FPGA circuitry configured and/or structured to perform operations corresponding to the machine readable instructions. Additionally or alternatively, the inspection circuitry 186 may be instantiated by any other combination of hardware, software, and/or firmware. For example, the inspection circuitry 186 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for inspecting includes means for measuring or means for determining a measurement. In some examples, the means for inspecting includes means for detecting. In some examples, the means for inspecting includes means for identifying. For example, the means for measuring, the means for detecting, and/or the means for identifying may be implemented by measurement determiner circuitry 908. In some examples, the measurement determiner circuitry 908 may be instantiated by programmable circuitry. For instance, the measurement determiner circuitry 908 may be instantiated by a microprocessor executing machine executable instructions such as those implemented by at least blocks 1004-1010 of FIG. 10. In some examples, the measurement determiner circuitry 908 may be instantiated by hardware logic circuitry, which may be implemented by an ASIC, XPU, or FPGA circuitry configured and/or structured to perform operations corresponding to the machine readable instructions. Additionally or alternatively, the measurement determiner circuitry 908 may be instantiated by any other combination of hardware, software, and/or firmware. For example, the measurement determiner circuitry 908 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the inspection circuitry 186 of FIG. 1 is illustrated in FIG. 9, one or more of the elements, processes, and/or devices illustrated in FIG. 9 may be combined, divided, re-arranged, omitted, eliminated, and/or implemented in any other way. Further, the example interface circuitry 902, the example measurement determiner circuitry 908, the example user interface circuitry 906, the example trainer circuitry 914, and/or, more generally, the example inspection circuitry 186 of FIG. 9, may be implemented by hardware alone or by hardware in combination with software and/or firmware. Thus, for example, any of the example interface circuitry 902, the example measurement determiner circuitry 908, the example user interface circuitry 906, the example trainer circuitry 914, and/or, more generally, the example inspection circuitry 186, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example inspection circuitry 186 of FIG. 9 may include one or more elements, processes, and/or devices in addition to, or instead of, those illustrated in FIG. 9, and/or may include more than one of any or all of the illustrated elements, processes and devices.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

A flowchart representative of example machine readable instructions, which may be executed by programmable circuitry to implement and/or instantiate the inspection circuitry 186 of FIG. 9 and/or representative of example operations which may be performed by programmable circuitry to implement and/or instantiate the inspection circuitry 186 of FIG. 9, are shown in FIG. 10. The machine readable instructions may be one or more executable programs or portion(s) of one or more executable programs for execution by programmable circuitry such as the programmable circuitry 1112 shown in the example programmable circuitry platform 1100 discussed below in connection with FIG. 11 and/or may be one or more function(s) or portion(s) of functions to be performed by the example programmable circuitry (e.g., an FPGA) discussed below in connection with FIGS. 12 and/or 13. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart illustrated in FIG. 10, many other methods of implementing the example inspection circuitry 186 may alternatively be used. For example, the order of execution of the blocks of the flowchart may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may include one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 10 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read-only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 10 is a flowchart representative of example machine readable instructions and/or example operations 1000 that may be executed, instantiated, and/or performed by programmable circuitry to measure a component. The example machine-readable instructions and/or the example operations 1000 of FIG. 10 begin at block 1002, at which the inspection circuitry 186 obtains image data captured at a first time. For example, the inspection circuitry 186 can obtain the image data via the interface circuitry 902. The image data can correspond to an image of a reference marker (e.g., the reference marker 216, 218, 302, 402, 502, 602, 604, 606, 722, 724 of FIG. 2, 3, 4, 5, 6, 7 as displayed on a component (e.g., the airfoil 200, 300, 400, 500, 600 of FIG. 2, 3, 4, 5, 6, the rotor 702 of FIG. 7, and/or the stator 704 of FIG. 7) of a gas turbine engine (e.g., the turbofan engine 100 of FIG. 1). In some examples, the first time is after a first utilization of the component 200, 300, 400, 500, 600, 702, 704, but can be any time after the component having the reference marker is installed in the turbofan engine 100. The reference marker 216, 218, 302, 402, 502, 602, 604, 606, 722, 724 can include spatial marking features that define a geometry of the component 200, 300, 400, 500, 600, 702, 704. In some examples, one or more of the spatial marking features of the reference marker 216, 218, 302, 402, 502, 602, 604, 606, 722, 724 have known dimensions to enable determination/measurement of a dimension of the component 200, 300, 400, 500, 600, 702, 704. In some examples, the reference marker 216, 218, 302, 402, 502, 602, 604, 606, 722, 724 includes detectable features that are detectable by the inspection circuitry 186. In some examples, the reference marker 216, 218, 302, 402, 502, 602, 604, 606, 722, 724 includes identifiable features such that the reference marker the reference marker 216, 218, 302, 402, 502, 602, 604, 606, 722, 724 is encoded with an ID associated with the component 200, 300, 400, 500, 600, 702, 704.

At block 1004, the measurement determiner circuitry 908 analyzes the first image data to detect the reference marker 216, 218, 302, 402, 502, 602, 604, 606, 722, 724 on the component 200, 300, 400, 500, 600, 702, 704. For example, the measurement determiner circuitry 908 can execute an example detection model 910 trained to detect the reference marker 216, 218, 302, 402, 502, 602, 604, 606, 722, 724 via the detectable features included therein. For example, the detection model 910 can be trained to identify, detect, and localize the reference marker 216, 218, 302, 402, 502, 602, 604, 606, 722, 724 based on one or more of template matching, line detection, circle detection, square detection, corner detection, color or pattern detection, etc.

At block 1006, the measurement determiner circuitry 908 identifies the component 200, 300, 400, 500, 600, 702, 704. For example, the measurement determiner circuitry 908 can decode an ID associated with the component 200, 300, 400, 500, 600, 702, 704 based on identifiable features in the reference marker 216, 218, 302, 402, 502, 602, 604, 606, 722, 724. In some examples, the measurement determiner circuitry 908 decodes the reference marker 216, 218, 302, 402, 502, 602, 604, 606, 722, 724 and identifies the component 200, 300, 400, 500, 600, 702, 704 by searching the ID against a look-up table, a library, and/or another data structure having the ID associated with the component 200, 300, 400, 500, 600, 702, 704.

At block 1008, the measurement determiner circuitry 908 measures the component 200, 300, 400, 500, 600, 702, 704 based on the reference marker 216, 218, 302, 402, 502, 602, 604, 606, 722, 724 as depicted in the first image data. For example, the measurement determiner circuitry 908 can execute an example measurement model 912 trained to measure the component 200, 300, 400, 500, 600, 702, 704 based on the reference marker 216, 218, 302, 402, 502, 602, 604, 606, 722, 724 via the features included therein.

At block 1010, the measurement determiner circuitry 908 compares the measure of the component 200, 300, 400, 500, 600, 702, 704 to baseline data 190 for the reference marker 216, 218, 302, 402, 502, 602, 604, 606, 722, 724. In doing so, the measurement determiner circuitry 908 can determine a measure of distortion.

At block 1012, the inspection circuitry 186 determines whether distortion is detected. For example, the inspection circuitry 186 can determine whether the distortion is detected based on the comparison of the measure to the baseline data 190. For example, when the measure differs from a previous measure of the reference marker 216, 218, 302, 402, 502, 602, 604, 606, 722, 724 the inspection circuitry 186 can determine that distortion is detected. When the answer to block 1012 is NO, control advances to block 1016.

On the other hand, when the measure differs from a previous measure of the reference marker 216, 218, 302, 402, 502, 602, 604, 606, 722, 724 the inspection circuitry 186 can determine that distortion is detected. When the answer to block 1012 is YES, control advances to block 1014, at which the inspection circuitry 186 determines a level of the distortion.

At block 1016, the inspection circuitry 186 determines whether to inspect another component. For example, the inspection circuitry 186 can determine whether another one of the components 200, 300, 400, 500, 600, 702, 704 is to be inspected. When the answer to block 1016 is YES, control returns to block 1002. In particular, the inspection circuitry 186 iterates through block 1002 to block 1016 until the answer to block 1016 is NO. When the answer to block 1016 is NO, control advances to block 1018.

At block 1018, the inspection circuitry 186 outputs results of the inspection. At block 1020, the inspection circuitry 186 transmits a result(s) of the inspection. For example, the inspection circuitry 186 can be configured to transmit one or more measurements of one or more components 200, 300, 400, 500, 600, 702, 704 to another system.

FIG. 11 is a block diagram of an example programmable circuitry platform 1100 structured to execute and/or instantiate the example machine-readable instructions and/or the example operations of FIG. 10 to implement the inspection circuitry 186 of FIG. 9. The programmable circuitry platform 1100 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 1100 of the illustrated example includes programmable circuitry 1112. The programmable circuitry 1112 of the illustrated example is hardware. For example, the programmable circuitry 1112 can be implemented by one or more integrated circuits, logic circuits, FPGAs, microprocessors, CPUs, GPUs, DSPs, and/or microcontrollers from any desired family or manufacturer. The programmable circuitry 1112 may be implemented by one or more semiconductor based (e.g., silicon based) devices. In this example, the programmable circuitry 1112 implements the interface circuitry 902, the measurement determiner circuitry 908, the user interface circuitry 906, the trainer circuitry 914, and/or the inspection circuitry 186.

The programmable circuitry 1112 of the illustrated example includes a local memory 1113 (e.g., a cache, registers, etc.). The programmable circuitry 1112 of the illustrated example is in communication with main memory 1114, 1116, which includes a volatile memory 1114 and a non-volatile memory 1116, by a bus 1118. The volatile memory 1114 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1116 may be implemented by flash memory and/or any other desired type of memory device. Access to the main memory 1114, 1116 of the illustrated example is controlled by a memory controller 1117. In some examples, the memory controller 1117 may be implemented by one or more integrated circuits, logic circuits, microcontrollers from any desired family or manufacturer, or any other type of circuitry to manage the flow of data going to and from the main memory 1114, 1116.

The programmable circuitry platform 1100 of the illustrated example also includes interface circuitry 1120. The interface circuitry 1120 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1122 are connected to the interface circuitry 1120. The input device(s) 1122 permit(s) a user (e.g., a human user, a machine user, etc.) to enter data and/or commands into the programmable circuitry 1112. The input device(s) 1122 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1124 are also connected to the interface circuitry 1120 of the illustrated example. The output device(s) 1124 can be implemented, for example, by display devices (e.g., a light emitting diode (LED), an organic light emitting diode (OLED), a liquid crystal display (LCD), a cathode ray tube (CRT) display, an in-plane switching (IPS) display, a touchscreen, etc.), a tactile output device, a printer, and/or speaker. The interface circuitry 1120 of the illustrated example, thus, typically includes a graphics driver card, a graphics driver chip, and/or graphics processor circuitry such as a GPU.

The interface circuitry 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1126. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1100 of the illustrated example also includes one or more mass storage discs or devices 1128 to store firmware, software, and/or data. Examples of such mass storage discs or devices 1128 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1132, which may be implemented by the machine readable instructions of FIG. 10, may be stored in the mass storage device 1128, in the volatile memory 1114, in the non-volatile memory 1116, and/or on at least one non-transitory computer readable storage medium such as a CD or DVD which may be removable.

From the foregoing, it will be appreciated that example systems, apparatus, articles of manufacture, and methods have been disclosed that improve engine component measurement and inspection techniques. Example reference markers disclosed herein enable measurements having accuracy up to 0.0001 inches, improving measurement accuracy relative to traditional methods.

Certain reference markers disclosed herein includes features that can be used to leverage automated detection techniques. In some examples, reference markers disclosed herein can be used in conjunction with an AI model structured to identify, detect, and localize the reference markers. In some examples, reference markers disclosed herein can be used in conjunction with an AI model structured to determine an explicit measurement of a component using the reference markers. In some such examples, the use of the AI model based on the reference markers reduces measurement error caused by variation in optical placement of an inspection tool relative to a component.

Examples disclosed herein provide for improved inspection techniques and methods. Examples reference markers disclosed herein reduce or eliminate the use of blade tip notches for tip loss measurement and inspection, which reduces costs of an airfoil and decreases performance loss due to leakage over the airfoil tip. Example reference marker disclosed herein enable in situ inspection of components of a gas turbine engine. Certain examples disclosed herein allow for more rapid and more accurate assessment of blade tip loss. Further aspects of the present disclosure are provided by the subject matter of the following clauses:

A turbine engine defining an axial direction and a radial direction, the turbine engine comprising a substrate, and a blade coupled to the substrate, the blade including a first side having an external surface and a reference marker provided on the external surface of the first side, the reference marker including spatial marking features having predetermined dimensions, the spatial marking features including (a) a first spatial marking feature at a first location on the external surface and (b) a second spatial marking feature at a second location on the external surface that is different than the first location, wherein a combination of the first spatial marking feature and the second spatial marking feature provide a first measure of the blade based on the predetermined dimensions.

The turbine engine of any preceding clause, wherein the reference marker is provided on an airfoil of the blade.

The turbine provided of any preceding clause, wherein the reference marker is displayed on a platform of the blade.

The turbine engine of any preceding clause, wherein the reference marker is provided on a portion of the blade at which a distortion occurs.

The turbine engine of any preceding clause, wherein the first measure is associated with a first time, and wherein the combination of the first spatial marking feature and the second spatial marking feature provide a second measure of the blade at a second time, the second measure based on the predetermined dimensions.

The turbine engine of any preceding clause, wherein the spatial marking features a difference between the first measure and the second measure is indicative of a distortion.

The turbine engine of any preceding clause, wherein the first spatial marking feature includes a reference datum, and wherein a tip of the blade is positioned a first distance from the reference datum, the first distance to be the first measure of the blade.

The turbine engine of any preceding clause, wherein the second spatial marking feature includes an array of parallel lines, the parallel lines positioned on the external surface of the blade at predetermined increments such that distances between the lines are the predetermined dimensions, the first distance provided based on the array of parallel lines.

The turbine engine of any preceding clause, wherein the reference marker includes rows of objects, the first spatial marking feature including a first row of the objects, the second spatial marking feature including a second row of the objects, wherein the predetermined dimensions are radial dimensions of the objects in the rows, and wherein the first measure is based on the radial dimensions of the objects and an amount of the rows of the objects.

The turbine engine of any preceding clause, wherein the spatial marking features include a third spatial marking features at a third location that is different than the first and second locations.

The turbine engine of any preceding clause, wherein the spatial marking features include lines extending radially inward from a tip of the blade, the predetermined dimensions to be radial dimensions of the lines, the first spatial marking feature including a first line of the lines having a first radial dimension, the second spatial marking feature including a second line of the lines having a second radial dimension larger than the first radial dimension, and the third spatial marking features includes a third line of the lines having a third radial dimension larger than the second radial dimension.

The turbine engine of any preceding clause, wherein the first spatial marking feature includes a first checkered box and the second spatial marking feature includes a second checkered box, the predetermined dimensions including radial dimensions of the first and second checkered boxes, wherein the first and second spatial marking features define a reference datum, and wherein a tip of the blade is positioned a first distance from the reference datum, the first distance to be the first measure of the blade.

The turbine engine of any preceding clause, wherein the spatial marking features of the reference marker are arranged in a pattern, and wherein the pattern is detectable by an inspection tool.

The turbine engine of any preceding clause, wherein the reference marker includes additive features applied to the external surface of the blade.

A system includes a first component, the first component including an edge; a first external surface; and a reference marker provided on the first external surface, the reference marker including spatial marking features having determined dimensions, wherein the spatial marking features including (a) a first spatial marking feature at a first location relative to the edge and (b) a second spatial marking feature at a second location relative to the edge that is different than the first location, known dimension, wherein the reference marker provides a first of measure of the first component based on a combination of the first spatial marking feature and the second spatial marking feature and the determined dimensions; and a second component located adjacent to the first component.

The system of any preceding clause, further including an inspection tool configured to analyze a first image to determine a first measurement indicative of the first dimension of the component, the first image depicting the reference marker on the component at the first time; analyze a second image to determine a second measurement indicative of the second dimension of the component, the second image depicting the reference marker on the component at a second time; and determine an amount of the distortion of the component based on a comparison of the first measurement and the second measurement.

The system of any preceding clause, wherein the reference marker includes detectable features arranged to be detectable by an inspection tool.

The system of any preceding clause, wherein the reference marker provides an indication of a distortion of the first component is based on a function of change between the reference marker at a first time and the reference marker at a second time.

The system of any preceding clause, wherein the reference marker is a first reference marker provided on a first portion of the first external surface of the first component, and the distortion is indicative of a first type of distortion, the first component further including a second reference marker provided on a second portion of the first external surface of the first component, the second reference marker indicative of a second type of distortion.

The system of any preceding clause, wherein the spatial marking features of the reference marker define a reference datum against which the edge can be compared to determine the first measure.

The system of any preceding clause, wherein the first component includes a first portion of the reference marker, the first portion including the first and second spatial marking features, the first spatial marking feature including an array of parallel lines spaced apart based on the determined dimensions, the second spatial marking feature including a first reference datum; wherein the reference marker includes a second portion provided on a second external surface of the second component, the second portion of the reference marker including a third spatial marking feature at a third location relative to the edge, the third spatial marking feature including a second reference datum; and wherein the reference marker provides the first measure of the first component based on the array of lines and the first and second reference datums.

A system comprising a component disposed within a casing of a gas turbine engine, the component having an external surface and a reference marker displayed on the external surface, and an inspection tool configured to analyze a first image to determine a first measurement of the component, the first image depicting the reference marker on the component at a first time, analyze a second image to determine a second measurement of the component, the second image depicting the reference marker on the component at a second time, and determine an amount of distortion of the component based on a comparison of the first measurement and the second measurement.

The system of any preceding clause, wherein first reference marker is a first reference marker disposed on a first portion of the external surface of the component, the first reference marker indicative of a first type of distortion, the component further including a second reference marker displayed on a second portion of the external surface of the component, the second reference marker indicative of a second type of distortion.

The system of any preceding clause, wherein the reference marker includes spatial features indicative of an orientation of the reference marker relative to the component, and dimensions of the spatial features are known, the spatial features indicative of a scale of the reference marker relative to the component.

An system comprising means for holding, means for directing a fluid coupled to the means for holding, and means for indicating displayed on an exterior surface of the means for directing, the means for indicating including spatial features arranged in a pattern such that dimensions of the spatial features are pre-defined, wherein the spatial features a first spatial feature and a second spatial feature spaced apart from the first spatial feature, and wherein a comparison between the first spatial feature and the second spatial feature is indicative of a measure of the means for directing.

The system of any preceding clause, further including means for inspecting.

The system of any preceding clause, further including means for capturing an image to capture the first image of the means for indicating at the first time and the second image of the means for indicating at the second time.

An apparatus including interface circuitry, machine-readable instructions, and at least one processor circuit to be programmed by the machine-readable instructions to: obtain a first image of reference marker as displayed on an exterior surface of an engine component at a first time, determine a first measurement of a dimension of the engine component based on the reference marker as depicted in the first image, and determine an amount of distortion of the engine component based on the first measurement of the dimension and baseline data corresponding to the reference marker and the engine component.

The apparatus of any preceding clause, wherein the reference marker include detectable features, one or more of the at least one processor circuit is to execute a first machine learning model to detect the reference marker in the first image.

The apparatus of any preceding clause, wherein one or more of the at least one processor circuit is to determine a second measurement of the dimension of the engine component based on the reference marker as depicted in second image of the engine component at a second time.

The apparatus of any preceding clause, wherein the second time is before the first time, and wherein the baseline data includes the second measurement, one or more of the at least one processor circuit is to determine the amount of distortion based on a comparison of the first measurement and the second measurement.

The apparatus of any preceding clause, wherein the reference data includes the second image of the reference marker, one or more of the at least one processor circuit is to determine the amount of distortion based on a comparison of the reference marker as depicted in the first image and the reference marker as depicted in the second image.

The apparatus of any preceding clause, wherein the reference marker includes spatial features defining a geometry of the engine component, the spatial features having known dimensions, the spatial features of the reference marker to have a first orientation relative to the blade at the first time, the spatial features of the reference marker to have a second orientation relative to the blade at the second time, one or more of the at least one processor circuit is to determine the amount of distortion based on a difference between the first orientation of the spatial features and the second orientation of the spatial features.

The apparatus of any preceding clause, wherein the reference marker includes identifying features encoded with an identifier associated with the engine component, one or more of the at least one processor circuit is to decode the reference marker in the first image to identify the engine component.

At least one non-transitory machine-readable medium comprising machine-readable instructions to cause at least one processor circuit to at least: obtain a first image of reference marker as displayed on an exterior surface of an engine component at a first time, determine a first measurement of a dimension of the engine component based on the reference marker as depicted in the first image, and determine an amount of distortion of the engine component based on the first measurement of the dimension and baseline data corresponding to the reference marker and the engine component.

The non-transitory machine-readable medium of any preceding clause, wherein the reference marker include detectable features, the instructions to cause one or more of the at least one processor circuit to execute a first machine learning model to detect the reference marker in the first image.

The non-transitory machine-readable medium of any preceding clause, wherein the instructions to cause one or more of the at least one processor circuit to determine a second measurement of the dimension of the engine component based on the reference marker as depicted in second image of the engine component at a second time.

The non-transitory machine-readable medium of any preceding clause, wherein the second time is before the first time, and wherein the baseline data includes the second measurement, the instructions to cause one or more of the at least one processor circuit to determine the amount of distortion based on a comparison of the first measurement and the second measurement.

The non-transitory machine-readable medium of any preceding clause, wherein the reference data includes the second image of the reference marker, the instructions to cause one or more of the at least one processor circuit to determine the amount of distortion based on a comparison of the reference marker as depicted in the first image and the reference marker as depicted in the second image.

The non-transitory machine-readable medium of any preceding clause, wherein the reference marker includes spatial features defining a geometry of the engine component, the spatial features having known dimensions, the spatial features of the reference marker to have a first orientation relative to the blade at the first time, the spatial features of the reference marker to have a second orientation relative to the blade at the second time, the instructions to cause one or more of the at least one processor circuit to determine the amount of distortion based on a difference between the first orientation of the spatial features and the second orientation of the spatial features.

The non-transitory machine-readable medium of any preceding clause, wherein the reference marker includes identifying features encoded with an identifier associated with the engine component, the instructions to cause one or more of the at least one processor circuit to decode the reference marker in the first image to identify the engine component.

A method including providing a blade within a casing of a turbine engine, the blade having an external surface and a reference marker displayed on the external surface, the reference marker including spatial features defining a geometry of the blade, the reference marker having one or more dimensions known based the spatial feature; obtaining a first image of the reference marker on the blade, the first image corresponding to the blade at a first time; and determining a first measurement of a dimension of the blade based the reference marker as displayed on the blade in the first image.

The method of any preceding clause, wherein the dimension of the blade corresponds to a tip dimension of the blade, the tip dimension indicative of a clearance between a tip of the blade and the casing surrounding the tip of the blade.

The method of any preceding clause, wherein the spatial features define a reference datum against which the first measurement can be determined.

The method of any preceding clause, wherein the spatial features include an array of parallel lines arranged relative to a reference datum, and the known dimensions include a respective distance between adjacent lines of the array of parallel lines.

The method of any preceding clause, wherein the spatial features include a plurality of lines extending radially inward from a tip of the blade, and the known dimensions to include respective lengths of the lines.

The method of any preceding clause, further including obtaining a second image of the reference marker on the component, the second image corresponding to the component at a second time.

The method of any preceding clause, further including analyzing the second image to determine a second measurement for the dimension of the blade, the second measurement based on the reference marker as displayed on the blade at the second time.

The method of any preceding clause, further including comparing the first measurement and the second measurement to determine an amount of distortion of the blade.

The method of any preceding clause, wherein the blade is installed in the turbine engine in the first image.

A turbine engine defining a radial dimension, the turbine engine comprising: a substrate; and a blade coupled to the substrate, the blade including a first side having an external surface and a reference marker provided on the external surface of the first side, the reference marker including spatial marking features having predetermined dimensions, the spatial marking features including (a) a first spatial marking feature at a first location on the external surface and (b) a second spatial marking feature at a second location on the external surface that is different than the first location, wherein a combination of the first spatial marking feature and the second spatial marking feature provide a first measure of the blade based on the predetermined dimensions.

The turbine engine of any preceding clause, wherein the reference marker is provided on the first side of an airfoil of the blade.

The turbine engine of any preceding clause, wherein the reference marker is provided on the first side of a platform of the blade.

The turbine engine of any preceding clause, wherein the reference marker is provided on a portion of the blade at which a distortion occurs.

The turbine engine of any preceding clause, wherein the first measure is associated with a first time, and wherein the combination of the first spatial marking feature and the second spatial marking feature provide a second measure of the blade at a second time, the second measure based on the predetermined dimensions.

The turbine engine of any preceding clause, wherein a difference between the first measure and the second measure is indicative of a distortion.

The turbine engine of any preceding clause, wherein the first spatial marking feature includes a reference datum, and wherein a tip of the blade is positioned a first distance from the reference datum, the first distance to be the first measure of the blade.

The turbine engine of any preceding clause, wherein the second spatial marking feature includes an array of parallel lines, the parallel lines positioned on the external surface of the blade at predetermined increments such that distances between the parallel lines are the predetermined dimensions, the first distance provided based on the array of parallel lines.

The turbine engine of any preceding clause, wherein the reference marker includes rows of objects, the first spatial marking feature including a first row of the objects, the second spatial marking feature including a second row of the objects, wherein the predetermined dimensions are radial dimensions of the objects in the rows, and wherein the first measure is based on the radial dimensions of the objects and an amount of the rows of the objects.

The turbine engine of any preceding clause, wherein the spatial marking features include a third spatial marking features at a third location that is different than the first and second locations.

The turbine engine of any preceding clause, wherein the spatial marking features include lines extending radially inward from a tip of the blade, the predetermined dimensions to be radial dimensions of the lines, the first spatial marking feature including a first line of the lines having a first radial dimension, the second spatial marking feature including a second line of the lines having a second radial dimension larger than the first radial dimension, and the third spatial marking features includes a third line of the lines having a third radial dimension larger than the second radial dimension.

The turbine engine of any preceding clause, wherein the first spatial marking feature includes a first checkered box and the second spatial marking feature includes a second checkered box, the predetermined dimensions including radial dimensions of the first and second checkered boxes, wherein the first and second spatial marking features define a reference datum, and wherein a tip of the blade is positioned a first distance from the reference datum, the first distance to be the first measure of the blade.

The turbine engine of any preceding clause, wherein the spatial marking features of the reference marker are arranged in a pattern, and wherein the pattern is detectable by an inspection tool.

A system, comprising: a first component, the first component including: an edge; a first external surface; and a reference marker provided on the first external surface, the reference marker including spatial marking features having predetermined dimensions, the spatial marking features including (a) a first spatial marking feature at a first location relative to the edge and (b) a second spatial marking feature at a second location relative to the edge that is different than the first location, wherein the reference marker provides a first measure of the first component based on a combination of the first spatial marking feature and the second spatial marking feature and the predetermined dimensions; and a second component located adjacent to the first component.

The system of any preceding clause, wherein the reference marker includes detectable features arranged to be detectable by an inspection tool.

The system of any preceding clause, wherein the reference marker provides an indication of a distortion of the first component based on a function of change between the reference marker at a first time and the reference marker at a second time.

The system of any preceding clause, wherein the reference marker is a first reference marker disposed on a first portion of the first external surface of the first component, and the distortion is indicative of a first type of distortion, the first component further including a second reference marker displayed on a second portion of the first external surface of the first component, the second reference marker indicative of a second type of distortion.

The system of any preceding clause, wherein the spatial marking features of the reference marker define a reference datum against which the edge can be compared to determine the first measure.

The system of any preceding clause, wherein the first component includes a first portion of the reference marker, the first portion including the first and second spatial marking features, the first spatial marking feature including an array of parallel lines spaced apart based on the predetermined dimensions, the second spatial marking feature including a first reference datum; wherein the reference marker includes a second portion provided on a second external surface of the second component, the second portion of the reference marker including a third spatial marking feature at a third location relative to the edge, the third spatial marking feature including a second reference datum; and wherein the reference marker provides the first measure of the first component based on the array of lines and the first and second reference datums.

A system, comprising: means for holding; means for directing a fluid coupled to the means for holding; and means for indicating optically visible on an exterior surface of the means for directing, the means for indicating including spatial features arranged in a pattern such that dimensions of the spatial features are predetermined, wherein the spatial features including a first spatial feature and a second spatial feature spaced apart from the first spatial feature, and wherein a comparison between the first spatial feature and the second spatial feature is indicative of a measure of the means for directing.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A turbine engine (100) defining a radial dimension, the turbine engine (100) comprising:
a substrate (118, 142); and
a blade (164, 168, 172, 176, 706, 708) coupled to the substrate (118, 142), the blade (164, 168, 172, 176, 706, 708) including a first side having an external surface (214) and a reference marker (216, 218, 302, 402, 502, 602, 604, 606, 722, 724) provided on the external surface (214) of the first side, the reference marker (216, 218, 302, 402, 502, 602, 604, 606, 722, 724) including spatial marking features having predetermined dimensions, the spatial marking features including (a) a first spatial marking feature at a first location on the external surface (214) and (b) a second spatial marking feature at a second location on the external surface (214) that is different than the first location, wherein a combination of the first spatial marking feature and the second spatial marking feature provide a first measure of the blade (164, 168, 172, 176, 706, 708) based on the predetermined dimensions.

2. The turbine engine of claim 1, wherein the reference marker (216, 218, 302, 402, 502, 602, 604, 606, 722, 724) is provided on the first side of an airfoil (200, 300, 400, 500, 600, 710, 714) of the blade (164, 168, 172, 176, 706, 708).

3. The turbine engine of claim 1, wherein the reference marker (216, 218, 302, 402, 502, 602, 604, 606, 722, 724) is provided on the first side of a platform (712, 716) of the blade (164, 168, 172, 176, 706, 708).

4. The turbine engine of claim 1, wherein the reference marker (216, 218, 302, 402, 502, 602, 604, 606, 722, 724) is provided on a portion of the blade (164, 168, 172, 176, 706, 708) at which a distortion occurs.

5. The turbine engine of any preceding claim, wherein the first measure is associated with a first time, and wherein the combination of the first spatial marking feature and the second spatial marking feature provide a second measure of the blade (164, 168, 172, 176, 706, 708) at a second time, the second measure based on the predetermined dimensions.

6. The turbine engine of claim 5, wherein a difference between the first measure and the second measure is indicative of a distortion.

7. The turbine engine of any preceding claim, wherein the first spatial marking feature includes a reference datum (226, 512, 518, 612, 732, 734), and wherein a tip (204) of the blade (164, 168, 172, 176, 706, 708) is positioned a first distance from the reference datum (226, 512, 518, 612, 732, 734), the first distance to be the first measure of the blade (164, 168, 172, 176, 706, 708).

8. The turbine engine of claim 7, wherein the second spatial marking feature includes an array of parallel lines (222, 236, 238, 730), the parallel lines (222, 236, 238, 730) positioned on the external surface (214) of the blade (164, 168, 172, 176, 706, 708) at predetermined increments such that distances between the parallel lines (222, 236, 238, 730) are the predetermined dimensions, the first distance provided based on the array of parallel lines (222, 236, 238, 730).

9. The turbine engine of any preceding claim, wherein the reference marker (216, 218, 302, 402, 502, 602, 604, 606, 722, 724) includes rows (308) of objects (306), the first spatial marking feature including a first row (308) of the objects (306), the second spatial marking feature including a second row (308) of the objects (306), wherein the predetermined dimensions are radial dimensions of the objects (306) in the rows (308), and wherein the first measure is based on the radial dimensions of the objects (306) and an amount of the rows (308) of the objects (306).

10. The turbine engine of any preceding claim, wherein the spatial marking features include a third spatial marking features at a third location that is different than the first and second locations.

11. The turbine engine of claim 10, wherein the spatial marking features include lines (406) extending radially inward from a tip (204) of the blade (164, 168, 172, 176, 706, 708), the predetermined dimensions to be radial dimensions of the lines (406), the first spatial marking feature including a first line (406a) of the lines (406) having a first radial dimension, the second spatial marking feature including a second line (406b) of the lines (406) having a second radial dimension larger than the first radial dimension, and the third spatial marking features includes a third line (406c) of the lines (406) having a third radial dimension larger than the second radial dimension.

12. The turbine engine of any preceding claim, wherein the first spatial marking feature includes a first checkered box (508) and the second spatial marking feature includes a second checkered box (508), the predetermined dimensions including radial dimensions of the first and second checkered boxes (508), wherein the first and second spatial marking features define a reference datum (226, 512, 518, 612, 732, 734), and wherein a tip of the blade (164, 168, 172, 176, 706, 708) is positioned a first distance from the reference datum (226, 512, 518, 612, 732, 734), the first distance to be the first measure of the blade (164, 168, 172, 176, 706, 708).

13. The turbine engine of any preceding claim, wherein the spatial marking features of the reference marker (216, 218, 302, 402, 502, 602, 604, 606, 722, 724) are arranged in a pattern (220, 234, 304, 404, 504, 506, 514, 516, 609, 726), and wherein the pattern (220, 234, 304, 404, 504, 506, 514, 516, 609, 726) is detectable by an inspection tool (182, 184, 186).

14. A system, comprising:
a first component (200, 702), the first component (200) including:
an edge (204, 208, 210);
a first external surface (214); and
a reference marker (216, 218, 302, 402, 502, 602, 604, 606, 722, 724) provided on the first external surface, the reference marker (216, 218, 302, 402, 502, 602, 604, 606, 722, 724) including spatial marking features having predetermined dimensions, the spatial marking features including (a) a first spatial marking feature at a first location relative to the edge (204, 208, 210) and (b) a second spatial marking feature at a second location relative to the edge (204, 208, 210) that is different than the first location, wherein the reference marker (216, 218, 302, 402, 502, 602, 604, 606, 722, 724) provides a first measure of the first component based on a combination of the first spatial marking feature and the second spatial marking feature and the predetermined dimensions; and
a second component (118, 142, 704) located adjacent to the first component (200, 702).

15. A method comprising:
providing a blade (164, 168, 172, 176, 706, 708) within a casing (118, 142) of a turbine engine (100), the blade (164, 168, 172, 176, 706, 708) having an external surface (214) and a reference marker (216, 218, 302, 402, 502, 602, 604, 606, 722, 724) displayed on the external surface (214), the reference marker (216, 218, 302, 402, 502, 602, 604, 606, 722, 724) including spatial features defining a geometry of the blade (164, 168, 172, 176, 706, 708), the reference marker having one or more dimensions known based the spatial feature;
obtaining a first image of the reference marker (216, 218, 302, 402, 502, 602, 604, 606, 722, 724) on the blade (164, 168, 172, 176, 706, 708), the first image corresponding to the blade (164, 168, 172, 176, 706, 708) at a first time; and
determining a first measurement of a dimension of the blade (164, 168, 172, 176, 706, 708) based the reference marker (216, 218, 302, 402, 502, 602, 604, 606, 722, 724) as displayed on the blade (164, 168, 172, 176, 706, 708) in the first image.
